(19) **Europäisches Patentamt / European Patent Office / Office européen des brevets**

(11) **EP 1 316 004 B1**

(12) **FASCICULE DE BREVET EUROPEEN**

(45) Date de publication et mention de la délivrance du brevet:
**14.12.2011 Bulletin 2011/50**

(21) Numéro de dépôt: **01969849.7**

(22) Date de dépôt: **03.09.2001**

(51) Int Cl.:
***G05D 1/00*** *(2006.01)*

(86) Numéro de dépôt international:
**PCT/FR2001/002727**

(87) Numéro de publication internationale:
**WO 2002/021229 (14.03.2002 Gazette 2002/11)**

(54) **VISUALISATION DE DISPOSITIFS D'ANTI-COLLISION TERRAIN POUR AERONEF**

VORRICHTUNG ZUR ANZEIGE DER VERMEIDUNG EINER BODENKOLLISION FÜR EIN LUFTFAHRZEUG

VISUAL DISPLAY OF GROUND COLLISION AVOIDANCE DEVICE FOR AIRCRAFT

(84) Etats contractants désignés:
**DE ES FR GB IT**

(30) Priorité: **08.09.2000 FR 0011491**

(43) Date de publication de la demande:
**04.06.2003 Bulletin 2003/23**

(73) Titulaire: **Thales**
**75008 Paris (FR)**

(72) Inventeurs:
• **LEPERE, Gérard**
  **F-94117 Arcueil Cedex (FR)**
• **MEUNIER, Hugues**
  **F-94117 Arcueil Cedex (FR)**

(74) Mandataire: **Esselin, Sophie**
  **Marks & Clerk France**
  **Conseils en Propriété Industrielle**
  **Immeuble " Visium "**
  **22, avenue Aristide Briand**
  **94117 Arcueil Cedex (FR)**

(56) Documents cités:
| | |
|---|---|
| EP-A- 0 928 952 | EP-A- 0 989 386 |
| EP-A1- 0 565 399 | EP-A1- 0 565 399 |
| US-A- 5 666 110 | US-A- 5 839 080 |

**Description**

L'invention concerne l'assistance à la navigation aérienne, notamment lorsque survient un risque de collision, entre un aéronef et la zone qu'il survole.

Les propositions actuelles de dispositifs anti-collision comprennent le "Ground Collision Avoidance System" (GCAS), ou encore le "Ground Proximity Warning System" (GPWS). Ces dispositifs ont pour but d'avertir le pilote de ce qu'un risque de collision avec le sol (ou terrain survolé) peut survenir. Cette fonction est à la fois importante et délicate lors de l'approche préalable à l'atterrissage, ainsi qu'après le décollage, plus généralement dans tous les cas où l'aéronef se trouve nécessairement près du sol.

Les publications-brevet EP-A-0565399 et EP-A-0802469 décrivent des dispositifs d'aide à la navigation aérienne comprenant :

- une entrée permettant de recevoir des indications d'état représentatives de la position et du vecteur vitesse de l'aéronef (au moins),
- une mémoire de travail permettant de stocker une représentation du relief de la région survolée par l'aéronef,
- un organe de traitement, qui utilise les indications d'état et la représentation du relief, et s'en sert pour définir un Secteur Exploré rapporté à l'aéronef, et pour calculer dans ce secteur divers contours en fonction de l'intersection de ce secteur avec la représentation du relief, et
- un outil de visualisation de ces contours.

L'ergonomie de la visualisation est un point critique. Il s'agit en effet d'équiper un maximum d'avions civils, et de fournir au pilote une information aussi claire et facile à interpréter que possible, car il peut se trouver dans une situation qui requiert son attention par ailleurs.

La présente invention vient améliorer la situation à cet égard.

Elle propose à cet effet un dispositif destiné à être embarqué sur un aéronef, et comprenant:

- une entrée pour recevoir des paramètres statiques et dynamiques de l'aéronef,
- un module d'aide agencé pour utiliser les paramètres et au moins une base de données du relief du terrain survolé, afin d'extraire des informations de relief sur un domaine exploré tri-dimensionnel, défini en fonction de la trajectoire de l'aéronef, et d'élaborer d'éventuelles informations d'alerte, correspondant à un risque de collision entre l'aéronef et le relief, en fonction d'au moins une trajectoire prédite de l'aéronef, et
- un module de visualisation, agencé pour coopérer avec le module d'aide afin d'afficher une représentation bidimensionnelle du relief sur un domaine visualisé, et d'y insérer une signalisation d'alertes éventuelles.

Selon une caractéristique de l'invention, le module d'aide est agencé pour établir un état de phase d'atterrissage et/ou de décollage détecté; le module d'aide est également agencé pour coopérer avec le module de visualisation afin d'inhiber sélectivement la signalisation éventuelle d'alertes (en particulier des pré-alarmes, des alarmes et des indications prévisionnelles sur celles-ci) sur des parties définies du domaine visualisé, en phase d'atterrissage et/ou de décollage détecté. Les parties définies du domaine visualisé comprennent des parties voisines de la trajectoire prédite de l'aéronef et des parties voisines d'une piste d'atterrissage et/ou de décollage.

Selon une autre caractéristique de l'invention, le module de visualisation, agencé pour coopérer avec le module d'aide afin d'afficher une représentation bi-dimensionnelle du relief sur un domaine visualisé est propre à inhiber certaines des parties de cette représentation en fonction d'une condition comprenant le fait que le point le plus bas de chacune de ces parties soit en dessous d'une hauteur choisie et qu'un critère de proximité entre l'aéronef et une piste soit validé.

D'autre part, l'invention propose un module d'aide agencé pour déterminer des coupes de terrain selon une règle de découpe comprenant plusieurs options.

Par ailleurs, le module de visualisation est agencé pour représenter des lignes d'alerte selon un mode choisi.

En outre, le module de visualisation est agencé pour représenter différemment des zones d'alerte de type différent et pour signaler des zones d'alerte en bordure du Secteur Exploré pour des zones d'alerte détectées en dehors du Secteur Exploré.

D'autres caractéristiques et avantages de l'invention apparaîtront à l'examen de la description détaillée ci-après, et des dessins annexés, sur lesquels :

- la figure 1 est un schéma de principe très général d'un dispositif d'aide à la navigation aérienne, de type GCAS, tel que ceux décrits dans EP-A-0 565 399 et FR-96 04678;

- la figure 2 est un schéma détaillé d'un exemple de réalisation du dispositif de la figure 1;

- la figure 3 illustre une visualisation sur écran d'un Secteur Exploré et de sa délimitation;

- la figure 4 est une vue en coupe verticale d'un exemple de terrain survolé par un aéronef et des couches de terrain correspondantes;

- la figure 4a est une vue complétant la figure 4 en introduisant un palpeur de détection des risques de collision;

- la figure 5 est une vue en coupe verticale d'un autre exemple de terrain survolé par un aéronef, montrant la détermination d'une zone de terrain alertant d'un premier type;

- la figure 5a est une vue en coupe verticale d'un exemple particulier de terrain bosselé survolé par un aéronef, montrant la détermination d'une zone de terrain alertant d'un premier type;

- la figure 6 est une vue en coupe verticale d'un troisième exemple de terrain survolé par un aéronef, montrant la détermination de deux zones de terrain alertant de types différents;

- la figure 7 illustre une visualisation sur écran, faisant apparaître un Secteur Exploré, et montrant la visualisation de terrains alertant situés en dehors de la zone d'affichage du Secteur Exploré;

- la figure 8 est une vue horizontale illustrant des modifications apportées aux lignes d'alerte dans le Secteur Exploré;

- la figure 8a est une vue horizontale illustrant d'autres modifications, complémentaires, apportées aux lignes d'alerte dans le Secteur Exploré; et

- la figure 9 est une vue horizontale illustrant la position minimale d'une ligne d'alerte par rapport à un aéronef.

Les dessins annexés sont pour l'essentiel de caractère certain. En conséquence, ils pourront non seulement permettre de mieux faire comprendre la description détaillée qui suit, mais aussi contribuer à la définition de l'invention, le cas échéant.

En outre, et compte tenu de la technicité de la matière, il est fait référence aux contenus descriptifs de EP-A-0 565 399 et EP-A-0 802 469 (issu de FR-96 04678), pour compléter au besoin la présente description aux yeux de l'homme du métier. Il en est de même pour le document suivant:

- Note de DASSAULT ELECTRONIQUE n°810-196 AN, diffusée publiquement en octobre 1997, intitulée "A New Approach to CFIT Prevention and to improve situational awareness : GCAS GROUND COLLISION AVOIDANCE SYSTEM".

On utilisera aussi des unités qui n'appartiennent pas au système MKSA, bien qu'elles en soient dérivées, dans la mesure où elles s'imposent en aéronautique civile.

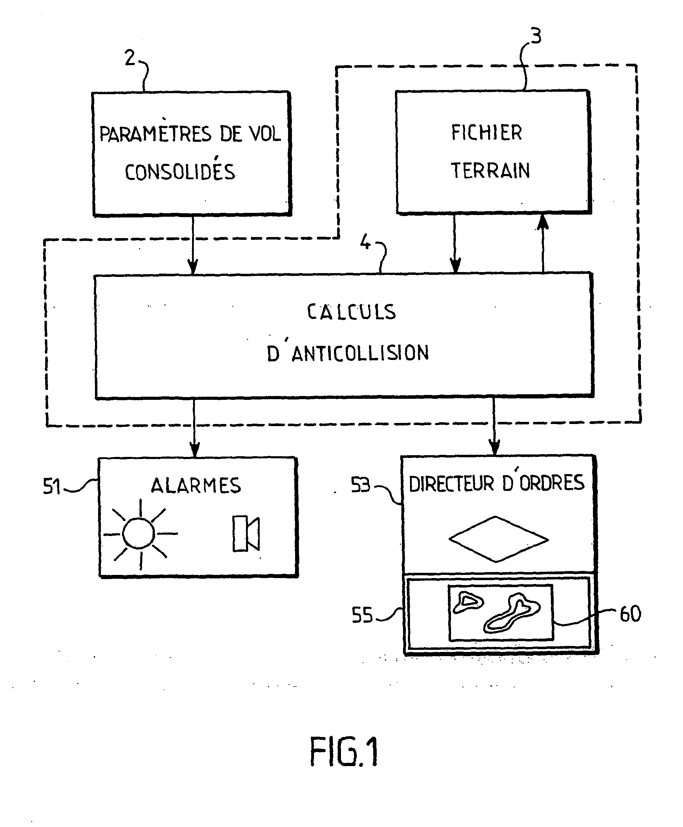

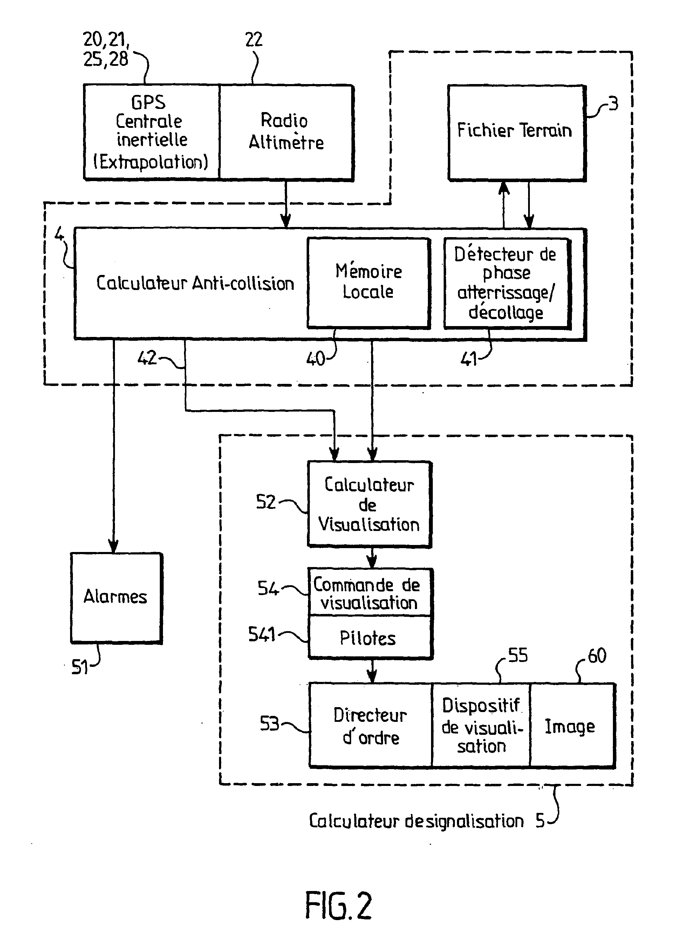

On se réfère tout d'abord aux figures 1 et 2 pour décrire un premier exemple de réalisation, non limitatif, d'un dispositif d'aide à la navigation aérienne auquel l'invention peut s'appliquer. Comme décrit dans EP-A-0 565 399, un tel dispositif est essentiellement destiné à être installé à bord d'un aéronef, et notamment un avion. Celui-ci comporte des équipements 2 capables de fournir sous forme de signaux électriques des indications de paramètres de vol (position et dynamique, notamment). Ces équipements peuvent comprendre une centrale inertielle ou baro-inertielle 20 ou INU, et/ou un instrument de radionavigation, ici un récepteur GPS 21 (mais il pourrait s'agir d'une IRS), avec son antenne, un radio-altimètre 22, avec son antenne, ou d'autres senseurs embarqués de navigation.

La centrale inertielle 20 fournit les composantes du vecteur vitesse (V) de l'aéronef et, le cas échéant, de son vecteur accélération ($\gamma$). On peut en déduire tout ou partie des angles caractéristiques associés (incidence, dérapage, pente, tangage, cap, gîte, notamment), ou recueillir directement les valeurs de ces angles utilisées en interne par la centrale inertielle. Ces valeurs angulaires peuvent être affichées et/ou utilisées au niveau du poste de commande. Il en est de même par exemple pour l'accélération, qui peut être calculée ou recalculée à partir du vecteur vitesse. Pour l'altitude, la centrale inertielle coopère avec un altimètre barométrique (non représenté), de manière connue.

Le récepteur GPS 21 fournit des mesures brutes de latitude L1, longitude G1, et altitude Z1, rafraîchies à une cadence p1 de quelques secondes à quelques minutes. Par intégration sur les vecteurs vitesse (et accélération le cas échéant), la centrale inertielle 20 fournit d'autres mesures de latitude L0, longitude G0, et altitude Z0, précises mais dérivant dans le temps. Un bloc 25 compare les deux types de mesure, et valide les grandeurs L1,G1,Z1, si elles sont cohérentes avec L0, G0, Z0. De telles techniques de validation sont connues. Les mesures L2,G2,Z2 validées sont disponibles à la cadence p1. Mais elles sont affinées à partir de la centrale inertielle à une cadence p2 d'environ une seconde.

Un bloc 28 extrapole les informations entre le dernier instant de mesure par l'instrument 21 et l'instant actuel (ou courant) (cette extrapolation est utile notamment lorsque les informations sont fournies à cadence insuffisamment rapide). Le radio-altimètre 22 délivre la hauteur au dessus du sol, notée HRS.

Cela sert à calculer la trajectoire prédite de l'avion, ainsi qu'un ou plusieurs axes instantanés de trajectoire. On supposera dans la suite qu'un seul axe instantané est calculé.

Un bloc 3 contient un fichier terrain. En fonction des grandeurs L et G, on accède à un extrait de ce fichier. Cet extrait, dit carte locale, est une représentation tridimensionnelle du relief de la région survolée par l'aéronef. Il est stocké dans une mémoire locale 40.

A partir de cette carte locale, et des grandeurs L, G, Z ainsi que HRS, le bloc 4 effectue des calculs d'anti-collision, qui peuvent être accompagnés de calculs d'évitement de terrain.

En présence d'un risque de collision, une alerte ou alarme 51 est émise. Un directeur d'ordres 53 peut suggérer une manoeuvre d'évitement, le cas échéant. Ceci est à destination du poste de commande (ou de pilotage). La carte locale peut être également utilisée pour la génération d'une image synthétique 60, sur un dispositif de visualisation 55.

Ce qui précède est pour l'essentiel décrit dans EP-A-0 565 399 et EP-A-0 802 469, qui indiquent également comment rapprocher et vérifier mutuellement les différentes informations disponibles, notamment en vertical.

L'une des bases essentielles de EP-A-0 565 399 est le fait que la Demanderesse a perçu la possibilité de stocker à bord d'un aéronef un fichier de terrain susceptible de représenter la quasi-totalité du bloc terrestre, dans la limite de contour et de résolution qui convient pour les besoins d'un aéronef. De plus, le fichier terrain peut contenir des données précises concernant les pistes, sur leur situation géographique, leur désignation et leur représentation par exemple. L'état de phase d'atterrissage peut être détecté par le module d'aide 4 selon les mêmes indices que ceux de EP-A-0 565 399.

On définira les notations ci-après :

- $Zb$ est l'altitude barométrique donnée par la mesure de la pression atmosphérique; elle varie selon l'altitude et les conditions météorologiques,
- $Zi$ est l'altitude inertielle calculée par la double intégration de l'accélération verticale mesurée par les accéléromètres de la centrale à inertie (variations à long terme),
- $Zbi$ est l'altitude baro-inertielle, c'est-à-dire la grandeur $Zb$ filtrée par la grandeur $Zi$, à l'aide d'une boucle du 3ème ordre, par exemple ($Z0=Zbi$),
- $Zc$ sera l'altitude calculée ($HRS + Zta$), où HRS est la hauteur radio-sonde (ou altitude relative) donnée par le ou les radio-altimètres de l'aéronef (précision de quelques mètres), et $Zta$ sera l'altitude du terrain sous l'aéronef donnée par le fichier terrain (défini plus loin), et
- $Zgps$ est l'altitude fournie par le GPS, par exemple, ou un autre instrument adéquat ($Z1=Zgps$).

Pour la suite de la description, quelques autres définitions sont utiles:

- on appelle "axe prédit" l'axe de la trajectoire passée (récente) et prédite de l'aéronef; si l'aéronef est en virage, cet "axe prédit" est courbe;
- on appelle "axe tangent" la tangente à la trajectoire de l'aéronef en sa position instantanée, c'est à dire la droite support de son vecteur vitesse instantané;
- on appelle "axe instantané" de la trajectoire de l'aéronef, un axe situé sensiblement entre l'axe tangent et l'axe prédit, et déterminé selon une règle pré-définie, par exemple, par une combinaison linéaire pondérée entre l'axe tangent et l'axe prédit; ainsi, un axe instantané peut être défini comme l'axe prédit, l'axe tangent ou une axe intermédiaire entre les deux; plusieurs axes instantanés différents peuvent être définis en même temps;- on appelle "plan vertical" une surface (non nécessairement plane) qui contient la verticale passant par l'aéronef et un axe instantané de la trajectoire de l'aéronef ; s'agissant de l'axe prédit, le "plan vertical" est une surface courbe si l'aéronef est en virage ; on qualifie de "verticales" les manoeuvres dont la composante principale est dans un plan vertical ;
- on appelle "plan horizontal" le plan horizontal passant par un point de référence de l'aéronef (centre de gravité par exemple); on qualifie comme "horizontales" ou "latérales" les manoeuvres dont la composante principale est dans un plan horizontal ; là aussi, le "plan" horizontal pourrait être une surface courbe dans l'espace, définie d'après la trajectoire de l'aéronef ;
- on distingue, parmi les manoeuvres horizontales, celles qui vont à gauche et celles qui vont à droite de la trajectoire prédite de l'aéronef ;
- enfin les mots "vertical", ainsi que "horizontal" ou "latéral" seront également utilisés pour qualifier notamment les obstacles et les risques qui peuvent être rencontrés lors des manoeuvres.

**EP 1 316 004 B1**

Une alerte peut être définies à l'aide d'une surface (en fait, une portion de surface), délimitant une zone de protection devant l'avion (plus généralement autour d'un aéronef) vis-à-vis du terrain. Chaque surface de protection peut être vue aussi comme une famille de courbes dans l'espace. On peut prévoir:

- pour l'alarme, une surface à court terme CCT, principalement destinée à éviter un accident. Dès qu'un point du terrain entre dans la surface ou l'enveloppe supérieure de la surface, le pilote doit intervenir (alarme) en effectuant immédiatement une manoeuvre d'évitement;
- pour la pré-alarme, une surface à moyen terme CMT, principalement destinée à prévenir le pilote que la trajectoire de son aéronef va rencontrer un obstacle si elle se poursuit telle quelle, et qu'il doit envisager une manoeuvre d'évitement (pré-alarme).

Les surfaces utilisées pour l'alarme et la pré-alarme sont de préférence définies toutes deux suivant le même principe mais avec des paramètres différents. Ces surfaces de protection peuvent être élaborées à partir de nombreux paramètres statiques et dynamiques de l'aéronef, en particulier :

- la fonction de transfert de pilotage de l'aéronef, c'est-à-dire sa capacité à manoeuvrer,
- les retards TR0 dus au temps de réaction du pilote de l'aéronef,
- la vitesse horizontale Vh de l'aéronef,
- la vitesse ascensionnelle Vz de l'aéronef,
- le facteur de charge admissible n.g,
- la hauteur de sécurité prévue, et
- le roulis de l'aéronef.

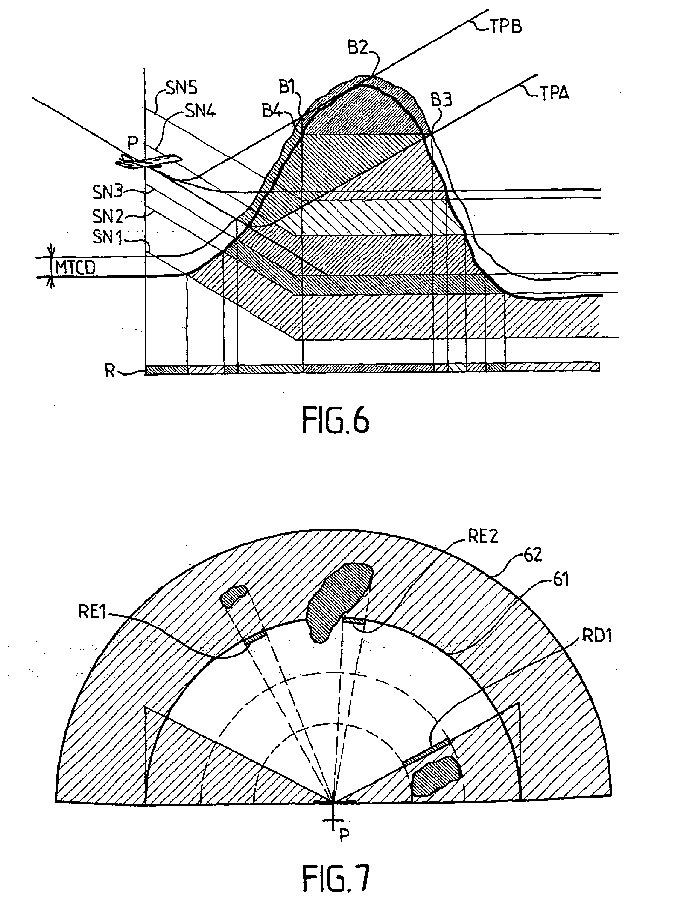

Selon EP-A-0565399 (notamment figure 6 et description correspondante), une courbe limite d'alerte dans le plan vertical peut être définie par quatre tronçons:

- de $T_0$ à $T_1$, la poursuite de la trajectoire prédite telle quelle (sans manoeuvre nouvelle) pendant un temps égal à un retard RT0 = $T_1$ - $T_0$, correspondant à un temps de réaction,
- de $T_1$ à $T_2$, une période de transition due à des actions de réduction éventuelle du roulis, et de changement du rayon de courbure de la trajectoire, passant de l'infini (vol en ligne droite) à un rayon ascensionnel $R_T$,
- de $T_2$ à $T_3$, la trajectoire limite d'évitement proprement dite, dont le rayon de courbure $R_T$ est par exemple directement fonction du carré de la vitesse linéaire $V_h$ de l'aéronef, divisé par le facteur de charge n.g réellement appliqué, soit

$$R_T = (V_h)^2/n.g$$

- au delà de $T_3$, une ligne droite de pente liée aux caractéristiques (performances) de l'aéronef.

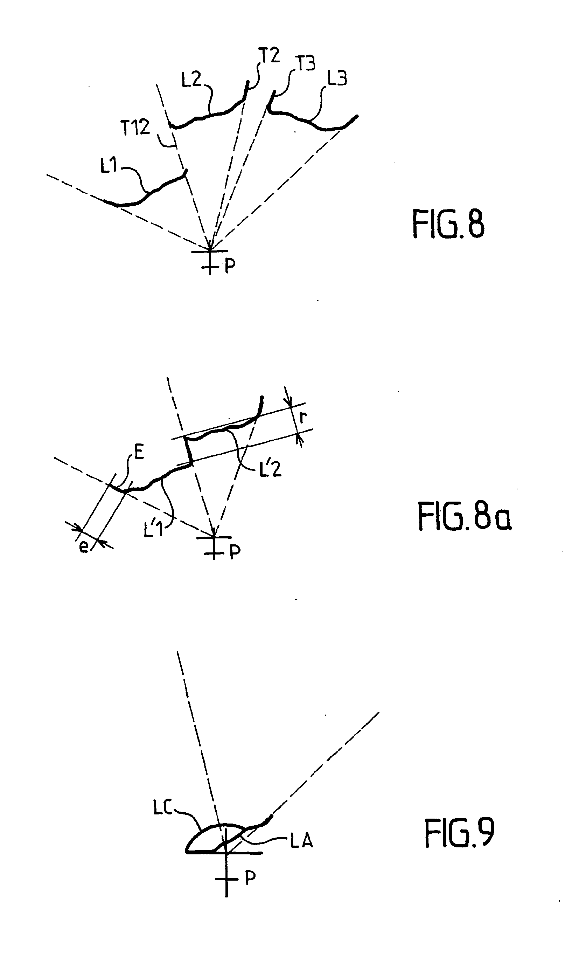

Par une famille de courbes limites de ce genre, on définit une surface dans l'espace, que l'on appelle ici "palpeur". En fait, avec un traitement numérique, cette surface est échantillonnée en une famille de segments curvilignes : voir notamment le texte et les figures 8A et 8B de EP-A-0 802 469, pour de plus amples informations.
Il est envisageable de "fixer" le ou les palpeurs par rapport à l'avion, et de rechercher l'intersection de ces palpeurs avec le terrain, compte-tenu d'une marge de sécurité.
On peut également procéder différemment, avec un "palpeur glissant":

- est définie d'abord une trajectoire correspondant à une manoeuvre standard d'évitement dans le plan vertical SVRM ("Standard Vertical Recovery Manoeuver");
- en prenant l'axe instantané de la trajectoire de l'aéronef et/ou selon l'orientation de la trajectoire prédite (ou leurs combinaisons linéaires), on peut faire glisser sur cet axe la SVRM, jusqu'au point où elle rencontre l'enveloppe du terrain;
- on peut alors définir un temps ou point de référence vertical VRP ("Vertical Reference point"), qui est le début de la SVRM;
- en amont de ce point VRP sur la trajectoire prédite, on définit deux temps VT5 et VT20, avec par exemple VT5 = VRP - 5 secondes, et VT20 = VRP - 20 secondes;
- une pré-alarme et une alarme "verticales" sont alors définies, respectivement dès que l'aéronef passe le point VT20, et dès qu'il passe le point VT5 (l'alarme "écrase" naturellement la pré-alarme).

Cependant, il existe des cas où, une autre manoeuvre étant possible, il est normal que l'aéronef dépasse le point ultime pour effectuer la manoeuvre d'évitement standard SVRM. Or, au-delà de ce point, aucune manoeuvre d'évitement "verticale" n'est plus possible.

Il est alors possible de définir une manoeuvre d'évitement latérale standard (SHRM), susceptible d'être initiée d'urgence pour éviter un risque de collision avec le terrain environnant avec des marges minimum de sécurité.

La trajectoire d'évitement SHRM proprement dite commence en un point HRP situé sur la trajectoire prédite. Avant ce point, on prévoit deux points anticipés HT5 et HT20 également situés sur la trajectoire prédite, par exemple respectivement à 5 et 20 secondes en amont du point HRP, compte tenu de la vitesse présente de l'aéronef. Une pré-alarme et une alarme "horizontales" sont alors définies, respectivement dès que l'aéronef passe le point HT20, et dès qu'il passe le point HT5 (l'alarme "écrase" naturellement la pré-alarme).

Pour le cas où l'aéronef est en vol horizontal :

1. le premier segment SHRM1 (de t1 à t2) consiste en une mise en virage accentué, avec par exemple un rayon de virage de l'ordre de 2 NM, compatible avec les performances de l'aéronef,

2. le second segment SHRM2 (de t2 à t3) consiste en une poursuite du virage accentué, de façon à revenir vers le point HRP,

3. un troisième segment SHRM3 (de t3 à t4) peut consister en une réitération des deux premiers segments (sans la mise en virage), de façon à revenir vers le point HRP, avec prise d'altitude, le cas échéant.

Pour ce qui concerne la manoeuvre d'évitement latéral et pour des situations de vol autre qu'horizontal, on se référera pour de plus amples détails à FR-A-2 747 492, figures 9A à 9D avec la description correspondante.

L'analyse de la situation instantanée et prédite de l'aéronef peut alors se résumer à un ensemble de tests de courbes, propre à générer en principe deux types d'alertes au moins:

- une alarme ("warning") indiquant une configuration nécessitant une action immédiate et/ou urgente du pilote, car la sécurité du vol est mise en cause.
- une pré-alarme ("caution") indiquant une configuration dangereuse à moyen terme, la pré-alarme présentant un caractère d'avertissement.
- éventuellement, un avis ("advisory") ou une indication prévisionnelle, qui correspond à une indication ou bien un conseil.

Séparément ou ensemble, ces différents niveaux de message sont appelés des "alertes". Il est considéré habituellement qu'au moins les niveaux "pré-alarme" et "alarme" sont à mettre en oeuvre. Pour alléger la description, on ne parlera donc pas des avis, ou alertes "advisory" (sauf sous la forme des "lignes d'alerte").

Ce qui précède définit un mode de fonctionnement du système embarqué sur l'aéronef, dans un but de prédiction et d'avertissement des collisions potentielles de l'aéronef avec le relief. Ce mode est appelé CPA (Collision Prediction and Alerting).

Les signaux de pré-alarme et d'alarme se manifestent sous forme spécifique au poste de pilotage: sons d'alerte, clignotants, message vocaux ou écrits sur petit écran, par exemple. La forme vocale ou écrite permet plus de précision, en distinguant notamment entre:

- "pull up Warning" ("alarme Monter"), correspondant à la préconisation d'une manoeuvre d'évitement vertical; et/ou
- "avoid terrain Warning" ("alarme évitement de terrain"), correspondant à la préconisation d'une manoeuvre d'évitement latéral.

Techniquement, les dispositions proposées donnent satisfaction dans la majeure partie des situations qu'un avion peut être amené à rencontrer en vol.

Le but final est de fournir au pilote de l'aéronef un signal d'alarme si la trajectoire prédite laisse supposer un risque certain vis-à-vis du terrain survolé avoisinant, afin que le pilote puisse initier d'urgence une manoeuvre d'évitement de ce terrain avec une marge minimum de sécurité. La notion de marge minimum de sécurité s'entend à la fois en temps de réaction de l'homme et en distance vis-à-vis du terrain évité. L'expression "terrain survolé avoisinant" tient compte non seulement du terrain directement rencontré dans l'axe de la trajectoire de l'aéronef, mais aussi de ses parties voisines.

Il reste une difficulté, qui est de présenter au pilote de l'avion une image claire et globale de la situation.

A priori, il est intéressant que la visualisation fasse apparaître tout ou partie des informations suivantes:

a) situation de l'avion (Background Display for Situation Awareness); ceci implique de montrer le relief du terrain environnant, la trajectoire prédite de l'aéronef, et sa hauteur relativement au relief.

b) zones d'alerte (Caution and Warning Alerting Areas), qui correspondent aux zones géographiques à l'origine de la ou des alertes en cours, s'il en existe.

c) Lignes limites d'alerte potentielle (Potential Alert Area Limit Lines), en bref, "lignes d'alerte"; une ligne d'alerte marque une zone susceptible d'engendrer une alerte à court terme, si l'avion y entre; ces informations sont de type avis ou indications ("advisories").

d) trajectoires permettant d'éviter le relief.

Alors que toutes ces informations sont à trois dimensions par nature, il faut les rendre le mieux possible sur un écran à deux dimensions.

La manière la plus simple de représenter le relief environnant consiste à utiliser des courbes de niveau horizontales. Mais la Demanderesse a observé qu'elles peuvent s'avérer délicates à interpréter. C'est le cas notamment lorsque l'aéronef se déplace dans un plan non horizontal, car la visualisation correspond moins bien à la sensation du pilote; c'est aussi le cas à proximité des zones aéroportuaires et des régions accidentées, où la visualisation peut devenir inutilement chargée.

Par ailleurs, alors que le pilote sait que la trajectoire courante de l'aéronef ne risque pas de toucher le relief, il peut être gêné par l'émission d'une alerte, fondée sur l'application d'une trajectoire d'évitement inadéquate, qui, elle touche le relief.

Plus généralement, les informations présentées, comme la représentation du relief environnant, les contours délimitant des dangers de collision et la représentation du relief lié à ces dangers, s'avèrent fournir des informations parasites dans certaines situations pouvant gêner les réactions et les décisions du pilote. Ainsi, la visualisation la plus parlante possible pour le pilote est nécessaire dans certaines situations: relief survolé particulièrement accidenté; problèmes techniques de l'aéronef; décollage et atterrissage. Au contraire, en phase de croisière d'un vol, le pilote pourrait être en manque d'informations sur les dangers environnants s'il décide de ne pas suivre l'indication donnée à la suite d'une alarme. L'invention cherche à remédier à ces inconvénients, notamment.

Les informations à visualiser proviennent de la mémoire locale 40. Le détecteur de phases de décollage et d'atterrissage par rapport à une piste 41 provoque, si ces phases sont détectées, des modifications de visualisation décrites plus loin selon l'invention.

Pour effectuer un tri sur ces informations, le calculateur de signalisation 5 comprend (ou se voit adjoindre) un calculateur de visualisation 52 apte à filtrer les informations suivant des critères définis, et à les envoyer à la commande de visualisation 54. Via des pilotes ou "drivers" 541, celle-ci transmet les informations au directeur d'ordre 53 et surtout au dispositif de visualisation 55, qui génère une image synthétique 60.

Les critères définis de filtrage sont généralement des calculs géométriques correspondant à des intersections de surfaces ou familles de courbes. Ces intersections calculées sont affectées d'attributs indiquant leur nature, par exemple: courbe de niveau à 1000 pieds, ou zone d'alarme "pull-up warning", éventuellement accompagnée de l'altitude du terrain en collision. De façon générale, on sait faire de tels calculs, dès lors que le critère d'intersection est défini. De même, on sait convertir des attributs en une forme de visualisation donnée, dès lors que celle-ci est définie.

Il convient que le dispositif de visualisation 55 permette au pilote de l'avion d'appréhender le mieux possible la représentation du relief survolé en trois dimensions, à partir d'une image synthétique 60 en deux dimensions. Il faut également que le pilote puisse anticiper par une manoeuvre horizontale et/ou verticale d'éventuelles collisions entre l'aéronef et le relief survolé, à l'aide d'une visualisation des possibles contours d'alerte sous une forme distinctive du contour de terrain. Les contours d'alerte définissent soit des lignes d'alerte qui marquent la limite géographique d'un danger potentiel de collision et anticipent l'apparition d'une alerte (pré-alarme ou alarme) soit des zones de terrain alertant qui apparaissent après le déclenchement d'une alerte.

L'un des buts de l'invention est que ces représentations d'information, capitales pour le pilote, sont fournies de façon à être perçues suivant leur degré d'importance en temps voulu. Ainsi, le pilote reçoit les informations adéquates à la situation du vol sans subir de gêne occasionnée par leur apparition inopportune, leur profusion ou leur manque de clarté dans leur visualisation.

Dans un mode de réalisation, l'image délivrée au pilote est contenue dans un Secteur Visualisé à deux dimensions. Par ailleurs, le relief survolé d'une part, et les éventuelles zones de collision entre l'aéronef et le relief survolé d'autre part, sont déterminés suivant un Secteur Exploré à trois dimensions, de préférence plus vaste (en projection) que le Secteur Visualisé.

Les opérations requises dans le Secteur Exploré sont celles qui vont permettre:

- la visualisation du terrain lui-même, pour appréhender le relief survolé; un découpage nouveau du terrain est décrit plus loin selon l'invention;
- en présence d'une alerte, le marquage de l'intersection entre le terrain et la surface palpeur qui a donné lieu à l'alerte, pour faire apparaître le relief présentant un danger correspondant;

- éventuellement (ou en option), avant une alerte, le marquage de l'intersection entre le terrain et une surface palpeur "glissante", pour faire apparaître la ligne présentant la limite géographique d'un danger potentiel correspondant.

Dans le Secteur Exploré, on définit une trajectoire instantanée de l'avion partant de la position instantanée de l'avion, balayant le Secteur Exploré suivant un angle d'ouverture comme décrit plus loin et engendrant une surface de référence.

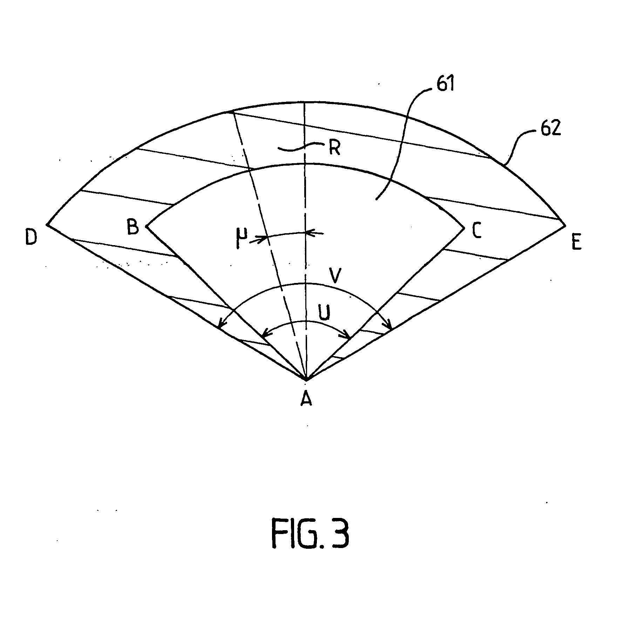

La figure 3 illustre la projection horizontale 62 de ce Secteur Exploré pouvant être visualisée sur un écran. Cette projection horizontale 62 est délimité par un secteur angulaire d'angle V allant de 1° à 360°, ayant pour sommet la représentation de l'aéronef A et étant fermé par un arc de cercle DE. Ce secteur angulaire est balayé régulièrement suivant une rotation de centre A, afin de connaître le terrain survolé avoisinant à des instants différents. L'arc de cercle DE marque la limite d'exploration horizontale au-delà de laquelle la trajectoire de l'aéronef est rendue très aléatoire. Le Secteur Exploré est divisé verticalement en secteurs d'angle μ adjacentes et d'arête commune la ligne verticale passant par la position instantanée de l'aéronef. Ces secteurs d'angle μ adjacents et projetés horizontalement en radiales R permettent de réduire à deux dimensions le relief et les zones de terrain alertant. Ils permettent également de visualiser sur écran, à un moment donné, une partie choisie de la projection horizontale du Secteur Exploré, appelé Secteur Visualisé.

La figure 3 illustre un Secteur Visualisé 61 représenté sur un dispositif de visualisation 55, préférentiellement un écran de visualisation. Le domaine 61 comporte un sommet A définissant la position actuelle de l'aéronef. Deux segments [AB] et [AC] formant un angle U délimitent le Secteur Visualisé à l'intérieur du secteur angulaire de la projection horizontale 62 du Secteur Exploré. Ce Secteur Visualisé 61 est apte à fournir le contour de terrain (également appelé fond d'image ou fond de carte) et les éventuels contours d'alerte grâce aux "radiales" R, d'angle μ de valeur comprise entre 0,1° et 10°, préférentiellement de 0.35°.

Le dispositif propose de représenter le Secteur Visualisé selon des échelles différentes sur l'écran. La sélection de ces échelles peut être faite automatiquement et/ou manuellement.

Le Secteur Exploré est tout d'abord défini pour détecter le relief environnant l'avion afin de proposer au pilote un fond de carte. Le dispositif permet ainsi une représentation du relief sur écran répondant à un échelonnement en altitude et fournissant un point de référence dans cette gradation comme par exemple l'altitude actuelle de l'avion ou l'altitude d'une piste.

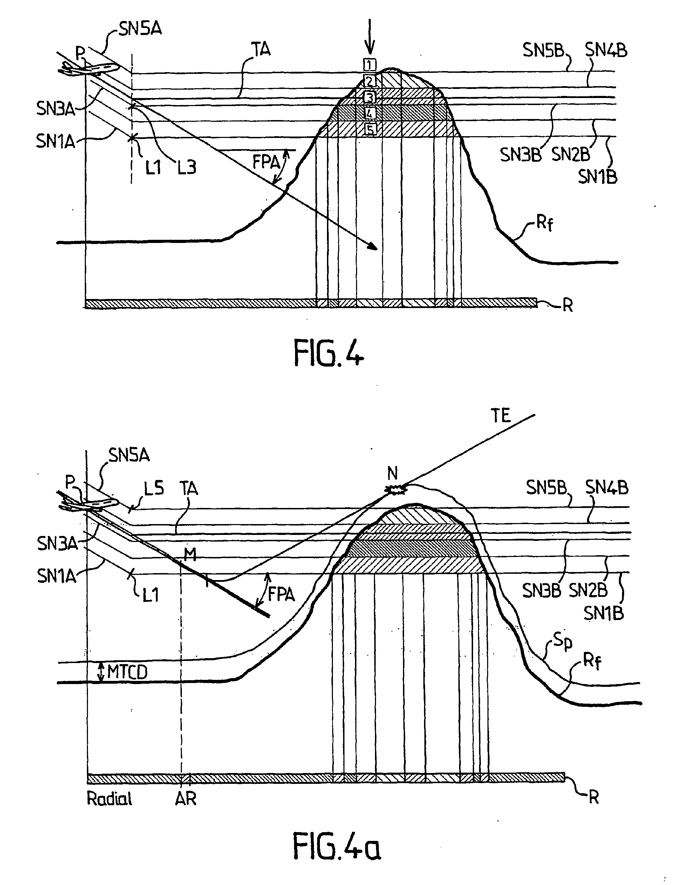

La figure 4 présente une coupe verticale du relief dans une radiale du Secteur Exploré.

Le relief Rf est représenté par un trait gras. On définit par calcul une surface de protection Sp qui recouvre le relief Rf. Une distance de MTCD sépare le relief Rf et la surface Sp représentant une marge minimum de sécurité avec le terrain, notée MTCD (Minimum Terrain Clearance Distance).

La représentation du relief s'effectue de préférence à l'aide de coupes de terrain, déterminées par des surfaces parallèles qui interceptent la représentation du relief. Toutefois, contrairement aux courbes de niveau, ces surfaces ne sont pas nécessairement horizontales, ni planes. Ainsi, une coupe de terrain est représentée par une surface SN3 selon un mode de réalisation de l'invention dans la figure 4 qui sera décrit plus loin. Les surfaces SN1 à SN5 sont parallèles à la surface SN3 et forment des coupes de terrain. Les surfaces SN1 à SN5 délimitent les couches de terrain 1, 2, 3, 4 et 5 selon un échelonnement vertical EV défini plus loin.

Dans l'exemple de la figure 4, la trajectoire fictive de l'avion TA représente une surface de référence utilisée pour fixer les limites supérieure et inférieure des couches de terrain comme indiqué dans le tableau I de l'annexe. Ces hauteurs de couches de terrain sont rapportées à la surface de référence et sont différenciées suivant des couleurs grâce à un "code de couleurs". Les divers modes de réalisation des couches de terrain abordés plus loin proposent en variante des hauteurs de couches de terrain rapportées à la référence du sol, par exemple.

L'échelonnement vertical EV définit donc les positions relatives des couches de terrain à une surface de référence.

Dans l'exemple de la figure 4, la couche de terrain 3 comprend une surface de référence appelée altitude de référence de niveau0: la limite supérieure SN4 a une altitude de +500 pieds par exemple au-dessus de l'altitude de référence, et une limite inférieure correspondant à - min(500 pieds, MTCD). Cette limite inférieure de cette "couche de terrain de référence" permet au pilote de visualiser en référence à la trajectoire fictive de l'avion TA, la couche de terrain correspondant à une hauteur relative de -500 pieds, ou à une marge minimum de sécurité (MTCD), si cette hauteur relative MTCD est supérieure à -500 pieds. Le pilote visualise la couche de terrain avec au moins une marge minimale limitée dans tous les cas à -500 pieds sous la trajectoire fictive de l'avion. La couche de terrain 4 comprend une limite supérieure correspondant à la limite inférieure de la couche de terrain 3 et une limite inférieure de -1000 pieds par exemple. A part ces couches de terrain particulières et la couche 5 qui n'a pas de limite supérieure, les autres couches ont des hauteurs identiques, par exemple 1000 pieds.

Dans l'exemple actuellement préféré de l'invention, le code de couleurs est indiqué dans le tableau II de l'annexe. Les couleurs utilisées sont des couleurs jaunes à très forte densité, forte densité et densité moyenne affectées respectivement aux couches 1, 2 et 3, et des couleurs vertes à faible densité et très faible densité respectivement affectées aux couches 4 et 5. Lorsque les coupes de terrain n'intersectent pas de relief, le fond de l'écran est noir, le noir étant perçu comme une couleur non alertante.

Dans l'exemple actuellement préféré de l'invention, le code utilise des couleurs jaunes et vertes qui s'adaptent à un fond d'écran et ont un caractère assez neutre. La couleur jaune utilisée, relativement terne sur fond noir, remplit les couches de terrain les plus élevées. Plus discrète que la couleur jaune utilisée, la couleur verte remplit les couches de terrain situées sous les couches de terrain jaunes. Une diminution progressive de la densité des couleurs utilisées pour des altitudes de couches de plus en plus faibles permet de rendre à l'écran les altitudes de ces couches par rapport à la référence choisie, ici par rapport à la trajectoire fictive TA. Ainsi, de par la densité et le caractère des couleurs utilisées, l'attention du pilote est plutôt concentré sur les couches situées au-dessus de la trajectoire fictive de l'avion TA.

Ainsi, la gradation choisie de rendu des altitudes comprend un code de couleur fondé sur un dégradé de couleurs neutres. Selon une première option, ce code de couleurs peut utiliser différentes couleurs et densités de celles présentées ici. Selon une autre option, le code peut n'utiliser qu'une densité et une plus grande diversité de couleurs.

Dans un premier mode de réalisation de l'invention, une coupe de terrain est définie par deux sections de surface qui se raccordent. On décrira ainsi la coupe SN3 de la figure 4.

La première section de surface SN3A de la coupe SN3 est ici un secteur contenu dans un demi-plan, qui suit la trajectoire prédite de l'aéronef sur une distance correspondant à un temps de vol choisi, jusqu'à un point L3. Ensuite, la seconde section de surface SN3B est de pente moins forte que la première, pour se rapprocher de l'horizontale. En fait, on considère actuellement que la seconde section de surface SN3B peut être contenue dans un demi-plan horizontal, avec la forme d'un secteur angulaire tronqué, qui se raccorde avec la section de surface SN3A.

Bien entendu, ceci se répète sur différents niveaux afin d'obtenir les surfaces SN1 à SN5 comme représenté sur la figure 4. Les points L des différentes surfaces sont ici sur une même verticale, bien que l'on puisse faire autrement.

De même, bien que d'autres solutions soient possibles, on préfère actuellement que l'échelonnement vertical EV des coupes soit défini au niveau des sections de surfaces SN1B à SN5B. S'agissant de secteurs angulaires tronqués, les surfaces SN1B à SN5B peuvent être échelonnées selon une grille de pas choisi, par exemple par valeurs multiples de 1000 pieds. La grandeur de base pour l'échelonnement peut être l'altitude géographique, ou la hauteur au sol, ou même la distance verticale rapportée à l'avion. Par ailleurs, même si les premiers secteurs SN1A à SN5A sont de pente axiale variable, il est toujours possible de ramener la distance entre deux secteurs à un écart vertical.

A ces surfaces SN1 à SN5, il correspond ici une trajectoire fictive de l'avion, illustrée en TA. Cette trajectoire fictive est composée de deux sections de surface (plus généralement deux portions de surface) définissant les plans de coupe.

Dans l'exemple décrit de la figure 4, les points L correspondent à 30 secondes de vol depuis la position actuelle P de l'avion, tandis qu'une alarme est définie par un délai de 5 secondes, et qu'une pré-alarme est définie par un délai de 20 secondes.

En conséquence, pendant un temps un peu supérieur au délai de pré-alarme, les coupes correspondant à la "première section de surface" s'effectuent dans la direction de l'axe instantané du vol. On notera que cette direction est celle du vecteur vitesse de l'avion, s'il n'y a pas de composante d'accélération.

Dans ce premier mode de coupes de terrain:

- par la "première section de surface", on tend à avantager ou privilégier la visualisation à court terme (30 secondes) des risques de collision suivant une trajectoire prédite de l'avion basée sur le vecteur vitesse instantané. Dans l'exemple, le terrain est découpé selon une oblique descendante progressive.
- à long terme (après 30 secondes), la "seconde section de surface" va cartographier le relief en supposant pratiquement qu'à ce long terme, la composante verticale du vecteur vitesse de l'aéronef a nettement diminué. Dans l'exemple, le vecteur vitesse est revenu sensiblement dans un plan horizontal. On remarquera que cette visualisation à long terme des coupes de terrain se fait de manière horizontale avec un décalage d'altitude par rapport à l'altitude instantanée de l'aéronef. Dans l'exemple de la figure 4, la surface SN3 se ramène par sa remontée à gauche à une altitude située juste sous l'avion, alors qu'elle est physiquement plus basse.

Ainsi le pilote appréhende le relief suivant une règle de découpe qui emprunte la trajectoire estimée de l'avion en descente puis en vol plus horizontal. Cette règle propose au pilote une visualisation plus proche de la réalité que l'ancienne règle de découpe qui suivait la trajectoire instantanée de l'avion. Cette signalisation amène une visualisation plus parlante et correspondant mieux à la sensation du pilote.

La partie basse de la figure 4a montre comment l'on établit, sur une radiale R du Secteur Visualisé, la représentation des coupes de terrain. Les attributs de visualisation des coupes sont illustrés schématiquement par des nuances de grisé/hachures dans la coupe verticale. On les retrouve sur la radiale du bas, mais les attributs des couches supérieures masquent ceux des couches inférieures. En pratique, la visualisation est en couleurs, comme vu précédemment.

Ainsi chaque "radiale" correspond à une tranche verticale du Secteur Exploré 62. Il lui correspond une radiale du Secteur Visualisé 61, le sommet étant la position de l'aéronef, illustré ou non sur l'écran. On construit suffisamment de radiales de ce genre pour remplir le Secteur Visualisé. Les radiales ont un pas d'angle μ constant.

Selon une variante, le pas d'angle p peut être variable selon la position des radiales dans le Secteur Visualisé. Ainsi, un pas plus petit peut être défini autour de la trajectoire de l'avion afin d'affiner la visualisation du relief, au contraire un pas plus grand évite une trop grande précision, inutile sur les bords de l'écran.

On considère maintenant un second mode de réalisation des coupes de terrain, qui est une variante du premier. Dans ce second mode, les coupes de terrain sont effectuées suivant des surfaces horizontales ayant un décalage d'altitude par rapport à l'avion d'une valeur que l'on note DHA (Delta de Hauteur par rapport à l'Avion) dont une formule selon l'invention est donnée par la valeur de la vitesse verticale de l'avion multipliée par un temps pouvant être de 30 secondes par exemple. La direction de cette valeur DHA est définie selon la direction de la composante verticale du vecteur vitesse instantané de l'avion. Ainsi lorsque l'avion descend, cette valeur DHA simule un rapprochement en altitude sur l'écran de l'avion et du relief visualisés, ce qui accentue la perception d'un danger grâce au fond de carte lorsqu'un risque de collision est signalé. Le résultat est le même lorsque l'avion monte.

On notera que, dans le cas de la figure 4, ce second mode revient, pour chaque coupe, comme SN3, à étendre la "seconde section de surface" horizontale SN3B vers la gauche, sous l'aéronef, tout en supprimant la "première section de surface" oblique SN3A. Dans ce cas, la valeur DHA peut être par exemple proportionnelle à la composante verticale du vecteur vitesse, fonction linéaire de cette même composante verticale du vecteur vitesse. On notera également que, dans la configuration avion de la figure 4, ce second mode donne le même résultat que le premier.

Dans un troisième mode, les coupes de terrain sont au moins partiellement des surfaces sensiblement horizontales ayant un décalage d'altitude par rapport à la piste la plus proche d'une valeur DHP (Delta de Hauteur par rapport à la Piste) pour une première surface choisie, d'une valeur variable pour les autres surfaces selon l'échelonnement choisi, en utilisant par exemple une grille de pas choisi correspondant à des valeurs multiples de 1000 pieds en référence à la première surface de valeur DHP, et en utilisant le même code de couleur pour identifier les couches de terrain.

Selon une première option, on peut, comme précédemment, prévoir pour chaque coupe une "première section de surface" parallèle à la trajectoire prédite de l'avion, puis une "seconde section de surface" définie comme indiqué ci-dessus.

Le pilote appréhende de cette façon le relief suivant une règle de découpe qui lui propose une visualisation du relief proche d'une piste, visualisation intéressante en cas d'atterrissage notamment.

En pratique, un dispositif peut utiliser un seul de ces modes ou plusieurs d'entre-eux sélectionnables de manière automatique et/ou manuelle.

Ainsi, le module d'aide 4 est agencé pour déterminer des coupes du terrain suivant des surfaces définies selon une règle de découpe, et le module de visualisation 5 est agencé pour visualiser une carte des coupes du terrain, selon une gradation choisie de rendu des altitudes.

Selon le premier mode et une variante du troisième mode de réalisation de coupes de terrain, la règle de découpe comprend la construction de surfaces de découpes (SN1, SN2, SN3, SN4, SN5) parallèles entre-elles selon un échelonnement vertical choisi et constituées chacune d'une première surface définie selon la direction de la trajectoire instantanée de l'aéronef TA, puis d'une deuxième surface horizontale.

Selon le deuxième mode et une variante du troisième mode de réalisation de coupes de terrain la règle de découpe comprend la construction de surfaces de découpes (SN1, SN2, SN3, SN4, SN5) parallèles entre-elles selon un échelonnement vertical EV choisi et constituées chacune d'une surface horizontale.

Selon une option des modes de réalisation de coupes de terrain, l'échelonnement vertical EV choisi est rapporté à la position instantanée de l'aéronef en P. Préférentiellement, les surfaces de découpes comprennent une partie définie par rapport à la vitesse instantanée de l'aéronef. De plus, de manière optionnelle, les surfaces de découpes comprennent chacune une surface définie en partie par rapport à la direction du vecteur vitesse instantanée de l'aéronef.

Selon une autre option des modes de réalisation de coupes de terrain, l'échelonnement vertical EV choisi est rapporté à la piste.

Dans le Secteur Exploré, le module d'aide est défini pour détecter d'éventuelles lignes de collision avec le relief, appelée ligne d'alerte.

La figure 4a est une vue plus précise de la figure 4. Sur cette vue en coupe verticale selon une radiale du Secteur Exploré, l'avion est dans une position P à l'instant t0. Sa trajectoire, ici une descente en ligne droite, présente un angle FPA avec l'horizontale. Autour du relief Rf (trait gras), on définit par calcul une surface de protection Sp (trait fin). Cette surface peut être définie de différentes manières, que l'on schématise par une marge minimum de sécurité avec le terrain, notée MTCD (Minimum Terrain Clearance Distance).

Une trajectoire limite d'évitement standard TE, appelée aussi "palpeur" ou trajectoire d'évasive, part de l'actuelle position P de l'avion. Le palpeur est composé de deux parties PM et MN. Sur la figure 4a, l'angle que fait le segment PM avec l'horizontale est préalablement choisi pour être lié au vecteur vitesse instantané de l'avion au point P. Sa partie "sensible" est une remontée forte, d'angle choisi à l'avance, qui commence en un point M de la trajectoire prédite. Comme décrit à propos du "palpeur glissant", on peut éloigner le point M sur la trajectoire prédite jusqu'à rencontrer la surface de protection Sp liée au relief en un point N, éventuellement (c'est-à-dire si c'est possible dans le domaine d'espace analysé). Perpendiculairement au plan de la figure, le palpeur glissant balaye l'ensemble du Secteur Exploré définissant une nappe de palpeurs glissants. Lorsqu'une manoeuvre d'évitement verticale n'est plus possible, la manoeuvre d'évitement latérale comme définie précédemment est préconisée.

Ainsi, le cas échéant, les points de rencontre obtenus lors du balayage constituent une première esquisse d'une ligne limite d'alerte potentielle. Le rôle de la ligne d'alerte est de donner une prévision du futur (pré-alarmes ou alarmes), comme on le verra. Cette ligne d'alerte est visualisée sur l'écran de navigation de préférence au maximum 120 secondes avant le point limite à partir duquel l'avion ne pourra plus effectuer sa trajectoire d'évitement. Au delà, la Demanderesse considère actuellement que la prédiction de la trajectoire de l'avion est trop entachée d'erreurs pour que la ligne d'alerte soit pertinente.

Dans l'exemple actuellement préféré de l'invention, la ligne d'alerte est représenté selon une ligne continue de couleur jaune de caractère alertant et de densité différente.

Dans la configuration avion de la figure 4a, la visualisation de la radiale sera complétée par un élément de ligne d'alerte AR, à la verticale du point M, où le palpeur glissant commence à toucher le relief au point N.

Ainsi, le module d'aide 4 est propre à définir une trajectoire d'évasive TE, comprenant une prolongation de la trajectoire instantanée de l'aéronef PM suivie d'un point de départ M d'une manoeuvre d'évitement à composante choisie, ainsi qu'à définir une nappe de trajectoires d'évasive par balayage angulaire à partir de la première, en principe de part et d'autre de celle-ci. De manière sélective, la manoeuvre d'évitement comprend une composante verticale (SVRM) avec un balayage angulaire correspondant de 0° à $\pm$ 30°, ou une composante horizontale (SHRM) avec un balayage angulaire correspondant de 0° à $\pm$ 90°.

Il a été indiqué que les lignes d'alerte précèdent la pré-alarme et l'alarme. En dehors du relief rapporté sur l'écran sous forme de radiales, le déclenchement d'une alerte provoque également l'apparition de la localisation des représentations de zones de relief susceptibles d'engendrer une collision.

On examinera maintenant des situations de pré-alarme ou d'alarme, en rapprochant les figures 4a, 5 et 6:

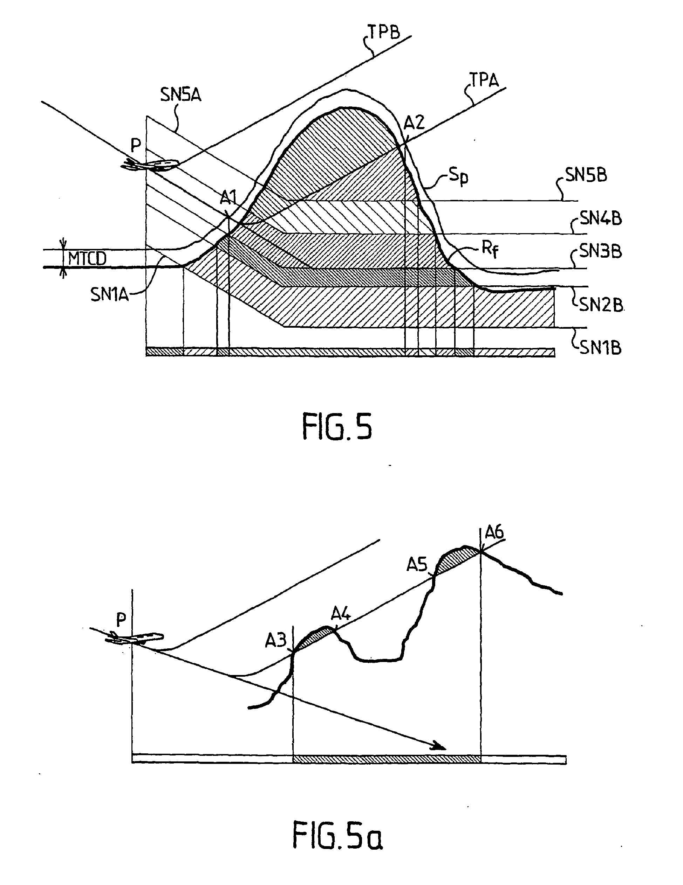

- si, en TPA, le palpeur glissant coupe le relief, pour une distance MP dont le temps de parcours (ou une grandeur reliée) est inférieur au seuil de pré-alarme (typiquement 20 secondes), les points d'intersection considérés (figure 5) font partie d'un volume de pré-alarme, avec toute la partie du relief située en amont du palpeur.

- si, en TPB, le palpeur glissant coupe le relief, pour une distance MP dont le temps de parcours (ou une grandeur reliée) est inférieur au seuil d'alarme (plus faible, typiquement 5 secondes), les points d'intersection considérés (figure 6) font partie d'un volume d'alarme, avec toute la partie du relief située en amont du palpeur, et une partie située en aval délimitée comme décrit ci-après. Une alarme franche (avec pré-alarme) est illustrée sur la figure 6.

Les palpeurs balayent le Secteur Exploré afin de fournir les zones de terrain alertant, en prenant en compte la marge minimum de sécurité avec le terrain.

Une pré-alarme franche (sans alarme) est illustrée sur la figure 5. Pour une alarme "caution" ("avertissement"), la zone de terrain située entre les deux palpeurs et délimitée par la surface Sp est considérée comme une zone d'alerte "avertissement" projetée entre les points A1 et A2 sur une radiale R. La figure 5 montre aussi que la symbolique d'affichage de la zone de pré-alarme "écrase" les indications de relief.

La figure 5A illustre la détection de deux zones d'alerte dédoublées. Dans ce cas, la zone d'alerte projetée est continue sur une radiale R entre le point A3 de la première zone de terrain alertant et le point A6 de la deuxième zone de terrain alertant, ceci afin d'égaliser la détection du relief sur une région à relief bosselé rapproché. Cette égalisation du relief permet de simplifier la visualisation du relief pour le pilote, et de lui donner les informations nécessaires sans détails inutiles.

Sur la figure 6, une alerte "warning" ("alarme") a été générée. Dans l'exemple actuellement préféré de l'invention, la délimitation d'une "zone d'alerte warning" diffère de la délimitation d'une "zone d'alerte caution" vue précédemment. La zone de terrain située sur le palpeur TPB (entre les points B1 et B2) et au-delà, de même que la zone de terrain située entre les deux palpeurs sur la ligne (B3-B4) et au-delà sont considérées comme zone d'alerte "warning" ("alarme"). La zone de terrain restante située entre les deux palpeurs est considérée comme une zone d'alerte "caution" ("pré-alarme"). Ces zones de terrain sont projetées, avec à chaque fois un attribut de visualisation spécifique, sur la radiale R sous-jacente sur la figure. Cette différence de délimitation de zones permet une estimation majorée des zones d'alerte "alarme" par rapport à la délimitation utilisée pour les zones d'alerte "pré-alarme". Cette délimitation garantie une marge de sécurité pour l'évaluation de la situation par le pilote.

Dans l'exemple actuellement préféré de l'invention, les zones de terrain alertant sont superposées au fond d'image représentant le relief survolé. Suivant une autre variante, les zones de terrain peuvent être visualisées sur un fond d'image vierge.

Les figures 5 et 6 montrent, pour détecter les zones de terrain alertant, l'effet des palpeurs TPA ("caution") et TPB ("warning"), associés respectivement aux surfaces CMT et CCT, qui se distinguent selon que la manoeuvre est verticale (SVRM) ou horizontale (SHRM). En fait, on a de préférence en pratique une distinction faite entre:

- une zone de terrain alarmante pour le "pull-up warning", et
- une zone de terrain alarmante pour le "avoid terrain warning" , avec par exemple la trajectoire d'évitement latéral précitée (SHRM).

Dans le tableau III de l'annexe sont présentés les palpeurs et les temps limites auxquels se déclenchent certains types d'alerte lors de la détection par les palpeurs d'un éventuel risque de collision.

Dans le tableau III, on fait une distinction entre l'alarme due à la manoeuvre verticale SVRM et celle due à la manoeuvre horizontale SHRM; par contre, on ne distingue pas entre la pré-alarme due à la manoeuvre verticale SVRM et celle due à la manoeuvre horizontale SHRM. Une variante de l'invention consisterait à faire aussi cette distinction, en utilisant des messages et des attributs de visualisation différents dans l'un et l'autre cas.

Dans un mode de réalisation préféré, les zones d'alerte préalables sont représentées en zones remplies de couleur jaune de caractère alertant pouvant se distinguer du jaune relativement neutre des couches de terrain; les zones d'alerte "alarme" sont représentés suivant la même texture à l'écran, quel que soit leur type: "éviter terrain" et "cabrer". Par contre, elles peuvent être distinguées par deux variantes d'une couleur frappante (alarmante): la zone de terrain justifiant l'alarme "à cabrer" est par exemple représentée en rouge 100% uni; la zone de terrain justifiant l'alarme "éviter terrain" est représentée dans le même exemple selon une alternance de bandes en arc de cercle de couleur rouge 100% et noir 100%, larges de 2 mm pour chacune des couleurs, par exemple. Une variante consiste à réaliser un damier rouge et noir. Une autre variante propose de remplacer le noir par une autre couleur tranchant avec le rouge afin de produire un certain contraste pour le pilote, notamment du blanc.

Ces différenciations de couleurs et de formes suivant les types d'alertes garantissent au pilote une visualisation précise de la situation de l'avion avec son environnement. Cette visualisation optimise l'évaluation du pilote et ses décisions concernant la trajectoire future de l'avion.

Ainsi, le module d'aide 4 est agencé pour représenter, sur le dispositif de visualisation 55 et à la suite du déclenchement d'une alerte d'un certain type, des zones de terrain alertant de type correspondant délimitées suivant deux types de trajectoires d'évasive TPA et TPB et projetées selon des radiales R. Plus précisément et selon un aspect particulier de l'invention, les zones de terrain alertant de type pré-alarme comprennent une zone de terrain délimitée entre la trajectoire d'évasive TPA déclenchant une pré-alarme et la trajectoire d'évasive TPB déclenchant une alarme.

Plus précisément et selon un aspect particulier de l'invention, les zones de terrain alertant de type alarme comprennent une zone de terrain située sur la trajectoire d'évasive TPA entre les points (B1) et (B2) ainsi qu'au-delà, une zone de terrain située entre les deux trajectoires d'évasive TPA et TPB. délimitée sur son bord inférieur par le segment horizontal [B4-B3].

Selon un autre aspect particulier de l'invention, le module d'aide 4 est propre à utiliser des textures différentes pour les zones de terrain alertant de type alarme "évitement de terrain" et alarme "monter".

Selon une option, la texture est de couleur rouge unie pour la zone de terrain alertant de type alarme "monter".

Selon une option, la texture est préférentiellement de couleur rouge unie tranchant, en alternance, avec une autre couleur sous forme de bandes circulaires concentriques pour la zone de type alarme "évitement de terrain".

Selon une option, la texture est préférentiellement de couleur rouge unie tranchant, en double alternance, avec une autre couleur sous forme de bandes radiales et circulaires concentriques pour la zone de type alarme "évitement de terrain".

Un autre aspect de l'invention sera maintenant décrit en référence aux figures 3 et 7. Les calculs sont effectués sur un Secteur Exploré 62 plus grand que le Secteur Visualisé 61. Ceci permet d'anticiper sur l'évolution de la visualisation, avec l'avance de l'avion, du moins dans certains cas.

La Demanderesse s'est attachée au problème consistant à faire connaître au pilote les informations situées en dehors du Secteur Visualisé. Une solution peut être apportée de la manière qui sera maintenant décrite en référence à la figure 7.

Pour la clarté du dessin, le Secteur Exploré est représenté à 180°, soit $\pm$ 90° de part et d'autre du vecteur vitesse instantané de l'avion. En fait, on peut moduler sa largeur en fonction de la situation de l'avion. Par exemple, pour un vol stabilisé en ligne droite, on peut prendre $\pm$ 45° de part et d'autre de l'axe instantané de trajectoire de l'avion; en virage, le secteur peut être étendu angulairement du côté où va l'avion si nécessaire (virage prononcé par exemple), et éventuellement diminué de l'autre côté.

Compte-tenu des possibilités limitées des écrans de visualisation, le Secteur Visualisé sera en général plus étroit, tant en étendue angulaire qu'en rayon ("range"), que le Secteur Exploré.

On peut donc se trouver en présence de zones d'alerte situées dans le Secteur Exploré, mais hors du Secteur Visualisé. En pareil cas, la zone d'alerte est représentée par un marquage en bordure du Secteur Visualisé. On préfère actuellement le faire sous la forme d'un rectangle étroit de largeur fixe (2 mm ou 15 points), et de couleur correspondant au type d'alerte. La longueur du rectangle peut être définie sensiblement comme suit:

- en bordure latérale (RD1, figure 7), cette longueur est égale à l'étendue en distance de la zone d'alerte (sur l'écran);
- en bordure d'extrémité (RE1, figure 7), cette longueur est définie par l'étendue angulaire de la zone d'alerte (sur l'écran);
- dans le cas RE2, une partie de la zone d'alerte est contenue dans le Secteur Visualisé. En pareil cas, on limite le rectangle à la partie non visible de la zone d'alerte.

Plus généralement, on part de la partie non visible de la zone d'alerte, et on prend sa projection conforme (axiale ou radiale) sur la limite du Secteur Visualisé 61. Bien entendu, il est possible de moduler les dimensions et/ou l'apparence du rectangle, en fonction de l'alerte, ou du type d'écran par exemple. On peut aussi utiliser d'autres formes qu'un rectangle, par exemple une suite de petits cercles ou autres figures symboliques.

Ces zones d'alerte situées hors de la partie choisie du Secteur Exploré et signalées en bordure de celle-ci apportent au pilote les informations nécessaires pour décider d'une manoeuvre à effectuer indépendamment des informations préconisées sur les zones d'alertes situées dans la partie choisie. Ces informations fournissent au pilote les données indispensables pour décider en toute sécurité de la trajectoire de l'avion afin d'éviter une collision. Ainsi, un virage plus adapté à la situation qu'une manoeuvre d'évitement verticale préconisée pourra être envisagé si aucune zone d'alerte n'est affiché en limite de la partie choisie du Secteur Exploré sur la trajectoire du virage. Ainsi, le module de visualisation 4 est agencé pour piloter un écran de visualisation afin d'afficher une partie délimitée entre $\pm$ 45° et $\pm$ 90° en fonction de la situation de l'avion du Secteur Exploré 61 et lesdites éventuelles zone de terrain alertant.

Selon un autre aspect de l'invention, le module de visualisation 5 est agencé pour signaler différemment d'une part une éventuelle zone de terrain alertant dans la partie délimitée du Secteur Exploré 61, d'autre part une éventuelle zone de terrain alertant RE1 située hors de cette partie choisie du Secteur Exploré 61.

Plus précisément, l'affichage d'une éventuelle zone de terrain alertant située hors de la partie délimitée du Secteur Exploré 61 comprend au moins une visualisation d'une zone de terrain alertant sur les limites de ladite partie du Secteur Exploré 61.

Selon une première option, la visualisation d'une zone de terrain alertant sur les limites de ladite partie délimitée du Secteur Exploré comprend un rectangle de visualisation RE1. Plus précisément, le rectangle de visualisation RE1 est de largeur fixe, de longueur liée à celle du relief de la surface dangereuse, de couleur liée à un type d'alerte de collision possible.

On reviendra maintenant sur la représentation des lignes d'alerte, qui peuvent servir d'anticipation à une éventuelle pré-alarme. L'homme du métier comprendra que de nombreuses lignes d'alerte puissent apparaître en même temps sur l'écran dans certains cas, et de façon désordonnée, du moins en apparence. Les figures 8 et 8a illustrent des modifications que l'on peut apporter aux lignes d'alerte, pour éviter cela.

Il peut arriver que plusieurs lignes d'alerte soient obtenues en même temps, soit pour des parties différentes du relief, soit pour des degrés différents d'alerte future potentielle, soit pour des palpeurs différents (SVRM ou SHRM), par exemple. En principe, il existe toujours deux lignes d'alerte, correspondant l'une à une future pré-alarme, l'autre à une future alarme. Cependant, la ligne d'alerte pré-alarme peut se trouver seule visualisée, si l'autre est hors écran. Lorsque les deux lignes d'alertes pré-alarme/alarme sont affichables pour le même risque, on procède comme suit:

a) les lignes d'alertes sont affichées suivant le résultat d'une comparaison entre une valeur ALT définissant une durée et des valeurs seuils de durées Tai, i variant de 1 à 3. La valeur ALT est définie comme

**ALT = distance entre l'avion et la ligne d'alertes / vitesse de l'avion par rapport au sol considérées sur la trajectoire prédite de l'avion.**

Les résultats sont présentés en annexe dans le tableau IV dans lequel :

Ta1 prend de préférence une valeur de 600 secondes,
Ta2 prend de préférence une valeur de 20 secondes,
Ta3 prend de préférence une valeur de 5 secondes.

Une seule ligne d'alerte est ainsi visualisée à la fois en fonction du temps qui sépare l'avion du point limite à partir duquel l'avion ne pourra plus effectuer sa trajectoire d'évitement;

b) l'affichage des lignes d'alerte se fait de préférence sur le bord haut de l'écran, le plus éloigné de la représentation de l'avion;

c) en principe, les lignes d'alerte sont supprimées en cas de pré-alarme ou d'alarme.

Comme illustré par la figure 8 et 8a et selon l'invention, les lignes d'alerte sont délimitées par des radiales réduites à des tronçons de radiales dits "ergots" E. La longueur-écran de ces tronçons de radiales peut prendre la valeur e, de 5,15 mm par exemple, soit 25 lignes en direction de l'éloignement de la représentation de l'avion en P.

Dans l'exemple actuellement préféré de l'invention, comme indiqué sur la figure 8, les extrémités des lignes d'alerte L'1 et L'2 situées sur une même radiale sont reliées entre elles si elles répondent à l'une des conditions suivantes :

- la distance r entre les points de la même radiale ne dépasse pas une valeur choisie, par exemple 2 NM ; ou
- la distance r entre les points de la même radiale ne dépasse pas 2 mm sur l'écran de visualisation pour des portées inférieurs à 80 NM.

Dans les autres cas de l'exemple actuellement préféré de l'invention, les tronçons de radiales sont séparés. Suivant que la ligne d'alerte est respectivement éloignée ou proche de la représentation de l'avion, l'ergot est respectivement dans le sens de rapprochement de la représentation de l'avion ou dans le sens de l'éloignement de la représentation de l'avion.

La figure 8a présente trois lignes d'alertes répondant à l'exemple actuellement préféré de l'invention pour la signalisation de leurs tronçons de radiales. Ainsi, les lignes d'alertes L1 et L2 situées sur une même radiale ne remplissent pas les conditions nécessaires pour être raccordées par le tronçon T12. De plus, les lignes d'alertes L2 et L3 ne présentent pas de radiales communes et possèdent chacune un tronçon de radiale respectif T2 et T3.

Ainsi, les lignes d'alerte sont plus facilement interprétées par le pilote.

Comme illustré sur la figure 9, la distance sur l'écran entre la représentation de l'avion et une ligne de d'alerte possible provoque leur juxtaposition ou leur croisement. Pour remédier à cet inconvénient, une distance minimale choisie sur l'écran est imposée entre la représentation de l'avion et une ligne d'alerte. Toute ligne d'alerte LA détectée sur une distance inférieure à cette valeur minimale est représentée par un arc de cercle LC autour de la représentation de l'avion.

Dans une variante de l'invention, cette valeur minimale choisie varie suivant l'angle de la radiale.

De plus, le secteur angulaire horizontal de la zone d'exploration des palpeurs est de préférence limité pour les lignes d'alerte à $\pm$ 30° de part et d'autre de la trajectoire de l'avion en ligne droite, ce qui permet de limiter les alertes intempestives dans des couloirs d'approche standard.

Ainsi, le module d'aide 4 est propre à détecter l'intersection N du relief Sp avec la trajectoire d'évasive TE puis à provoquer le déclenchement sélectif d'alertes suivant la durée estimée entre la position instantanée de l'aéronef P et le point de départ M d'une manoeuvre d'évitement. Plus précisément, les alertes comprennent une pré-alarme déclenchée pour la durée estimée de 20 secondes et une alarme déclenchée pour la durée estimée de 5 secondes.

Selon une caractéristique de l'invention, le module de visualisation 5 est propre à représenter, selon un mode choisi, un unique type de ligne d'alerte à la fois, détectée par l'intersection de la nappe de trajectoire d'évasive avec le relief Sp.

Selon un premier aspect, le mode choisi comprend la réduction des tronçons de radiales E délimitant lesdites lignes d'alerte à leurs extrémités.

Selon un autre aspect, le mode choisi comprend un raccordement de tronçons de radiales entre deux lignes d'alerte L'1 et L'2 ayant chacune un tronçon de radiale situé sur une même radiale; ledit raccordement étant effectué après vérification d'un critère. Plus précisément, le critère comprend le fait que la distance (r) entre deux quelconques des points de tronçon d'une même radiale n'excède pas une valeur pré-définie, notamment 2 NM.

Selon un autre aspect, le mode choisi comprend la visualisation d'une ligne d'alerte LA sous une forme arrondie LC autour de l'aéronef P lorsqu'une distance d'une valeur minimale prédéterminée n'est pas respectée entre:lesdites lignes d'alerte LA et l'aéronef P visualisé sur ledit support.

Selon un autre aspect, le mode choisi comprend un secteur angulaire choisi pour la visualisation des lignes d'alerte. Plus précisément, le secteur angulaire choisi est compris entre environ $\pm$ 10° et $\pm$ 90°.

Ces modifications permettent au pilote une meilleure analyse des informations concernant les lignes d'alerte.

Dans des situations comme le décollage et l'atterrissage, les alertes peuvent représenter des informations parasites sur certaines parties de l'écran pour le pilote. En pareil cas, EP-A-0 989 386 propose d'effectuer une inhibition complète du mode CPA, d'où il résulte une inhibition complète des alertes. Il s'est avéré que cette méthode ne donne pas toujours satisfaction. L'invention remédie à ce problème.

Dans le cas du décollage, une solution consiste à inhiber partiellement les lignes d'alerte par leur suppression autour de la trajectoire de l'avion suivant un secteur angulaire de, par exemple, $\pm$ 15°.

Ainsi, les parties voisines de la trajectoire prédite de l'aéronef TA comprennent un secteur angulaire, dans le plan de la trajectoire de l'aéronef, d'angle au sommet U compris entre environ $\pm$ 10° et $\pm$ 45° autour de la trajectoire de l'aéronef prédite de l'aéronef en phase de décollage détectée. Plus précisément, l'angle au sommet U est voisin de $\pm$ 15°.

En effet, l'inhibition totale des lignes d'alerte en phase de décollage, comme proposé dans la technique antérieure, provoquait une apparition brutale de ces lignes à la remise en marche du mode CPA et pouvait gêner le pilote.

Dans le cas de l'atterrissage, une inhibition partielle des lignes d'alerte est également proposée. Ces lignes d'alerte sont supprimées autour de la trajectoire de l'avion suivant un secteur angulaire pré-défini. Deux valeurs de ce secteur angulaire sont en option en fonction de l'altitude de l'avion par rapport à la piste.

L'avion doit tout d'abord répondre aux critères suivants :

- la hauteur de l'avion au-dessus de la piste doit être inférieure à une valeur pré-définie, de préférence 3500 pieds;
- la vitesse verticale de l'avion doit être inférieure à une valeur pré-définie, de préférence 2000 pieds/mn.

Dans l'exemple actuellement préféré de l'invention, si la distance horizontale entre l'avion et le seuil de la piste est comprise entre deux valeur pré-définies (entre 7 et 15 NM), alors le secteur angulaire d'inhibition des lignes d'alerte vaut par exemple $\pm$ 15°.

Dans l'exemple actuellement préféré de l'invention, si la distance horizontale entre l'avion et le seuil de la piste est inférieure à une valeur pré-définies (par exemple 7 NM), alors le secteur angulaire d'inhibition des lignes d'alerte vaut par exemple $\pm$30°.

Ainsi, les parties voisines de la trajectoire prédite de l'aéronef TA comprennent un secteur angulaire, dans le plan de la trajectoire de l'aéronef, d'angle au sommet U compris entre environ $\pm$ 10° et $\pm$ 45° autour de l'axe aéronef / piste en phase d'atterrissage détectée pour un critère d'approche d'une piste d'atterrissage validé. Ce critère d'approche comprend une hauteur déterminée de l'avion au-dessus de la piste d'atterrissage et une vitesse choisie de l'avion.

Plus précisément, l'angle au sommet U est d'environ $\pm$ 15° pour une distance horizontale entre l'avion et le seuil de la piste d'atterrissage comprise entre environ 7 NM et environ 15 NM. Plus précisément, l'angle au sommet U est d'environ $\pm$ 30° pour une distance horizontale entre l'avion et le seuil de la piste d'atterrissage comprise entre environ 2,7 NM et environ 7 NM. Ces deux conditions sont choisies indépendamment ou prises en combinaison afin d'inhiber les lignes d'alerte progressivement autour de la trajectoire de l'avion et de ne pas perturber le pilote par une disparition brutale de ces lignes. L'augmentation de la valeur du secteur d'inhibition en phase d'approche de la piste permet d'alléger les informations sur l'écran et de garder les informations plus essentielles. Sinon, le pilote peut être gêné par l'apparition de lignes d'alerte qui coupent la trajectoire de l'avion.

Lors de ces phases de décollage et d'atterrissage, l'invention propose une uniformisation en noir des seules couches de terrain à proximité de la piste suivant un certain critère.

La proximité de la piste est définie lorsque deux conditions sont réunies :

- la hauteur de l'avion au-dessus de la piste doit être inférieure à une valeur pré-définie, de préférence 3500 pieds;
- la distance entre l'aéronef et la piste la plus proche doit être inférieure à un seuil pré-défini (par exemple 15 NM).

Le critère propose que le point le plus bas de la couche considérée doit être en-dessous d'une hauteur pré-définie par rapport à la piste.

L'inhibition du mode CPA provoquait dans la technique antérieure l'uniformisation en noir des différentes couches de terrain représentées sur le fond d'image en phase de décollage ou d'atterrissage. Cette technique faisait disparaître brusquement des couches de terrain lors de l'inhibition totale du mode CPA et faisait réapparaître brusquement des couches de terrain lors de la reprise du mode CPA. En phases de décollage ou d'atterrissage, pour le confort et la sérénité du pilote dans la prise de décision, il est préférable que seule la piste et ses environs soient présentés comme des zones non alertantes, comme proposé selon l'invention, et que le reste des couches de terrain restent visibles. En variante, la piste peut être signalée en jaune sur le fond d'écran selon l'invention. Ce jaune étant une couleur voyante sans être alertante, la représentation de la piste délimite ainsi la zone qui intéresse le pilote en phase d'atterrissage ou de décollage.

Ainsi, le module de visualisation 5, agencé pour coopérer avec le module d'aide 4 afin d'afficher 55 une représentation bi-dimensionnelle du relief sur un domaine visualisé 61 est propre à inhiber certaines des parties de cette représentation en fonction d'une condition comprenant le fait que le point le plus bas de chacune de ces parties soit en dessous d'une hauteur choisie et qu'un critère de proximité entre l'aéronef et une piste soit validé. Plus précisément, ledit critère de proximité comprend le fait que la hauteur d'aéronef par rapport au niveau de la piste la plus proche soit inférieure à un seuil pré-défini et le fait que la distance horizontale entre l'aéronef et la piste la plus proche soit inférieure à un seuil pré-défini.

Bien entendu, les différents aspects de l'invention peuvent être appliqués indépendamment les uns des autres, ou pris en combinaison.

Le dispositif fait intervenir au long de la description un module d'aide et un module de visualisation qui coopèrent pour réaliser ensemble différents aspects de l'invention. Bien entendu, la répartition des fonctions entre le module d'aide et le module de visualisation peut varier selon des choix de réalisation à la portée de l'homme du métier. La totalité ou la quasi-totalité des fonctions peuvent être implantées dans le module d'aide ou le module de visualisation, ce dernier pouvant se réduire à l'écran. Un produit conforme à l'invention ne contient pas forcément l'écran. De plus, les modules d'aide et de visualisation sont considérés comme des objets virtuels non limités aux seuls éléments les constituant dans la description.

L'invention ne se limite pas à un dispositif applicable aux seuls avions. Ainsi, l'assistance à la navigation proposée selon l'invention peut s'intégrer à l'équipement d'autres aéronefs de type hélicoptère en procédant à quelques adaptations à la portée de l'homme du métier.

ANNEXE

### TABLEAU I

| Numéro de couche de terrain | Description | |
|---|---|---|
| 1 | Limite supérieure | aucune |
| | Limite inférieure | +1500 pieds |
| 2 | Limite supérieure | +1500 pieds |
| | Limite inférieure | +500 pieds |
| 3 | Limite supérieure | +500 pieds |
| | Limite inférieure | -min(500 pieds, MTCD) |
| 4 | Limite supérieure | -min(500 pieds, MTCD) |
| | Limite inférieure | -1000 pieds |
| 5 | Limite supérieure | -1000 pieds |
| | Limite inférieure | -2000 pieds |

La référence 0 d'altitude correspond à la trajectoire fictive de l'aéronef dans l'exemple actuellement préféré de l'invention.

### TABLEAU II

| Numéro de la couche de terrain | Couleur | Densité |
|---|---|---|
| 1 | Jaune | Très forte densité |
| 2 | Jaune | Forte densité |
| 3 | Jaune | Densité moyenne |
| 4 | Vert | Faible densité |
| 5 | Vert | Très faible densité |

### TABLEAU III

| Palpeur (manoeuvre) | Délai limite (Secondes) | alerte Anglais | Français |
|---|---|---|---|
| SVRM | 5 | pull-up | cabrer |
| SVRM | 20 | caution | pré-alarme |
| SHRM | 5 | avoid terrain | éviter terrain |
| SHRM | 20 | caution | pré-alarme |

TABLEAU IV

| Critère | Affichage |
|---|---|
| ALT > Ta1 | aucune ligne d'alertes affichée |
| Ta1 > ALT > Ta2 | ligne d'alertes pré-alarme affichée |
| Ta2 > ALT > Ta3 | ligne d'alertes alarme affichée |
| Ta3 > ALT | aucune ligne d'alertes affichée |

**Revendications**

1. Dispositif d'aide à la navigation aérienne, destiné à être embarqué sur un aéronef, et comprenant:

   - une entrée (2) pour recevoir des paramètres statiques et dynamiques de 1 ' aéronef,
   - un module d'aide (4) agencé pour utiliser lesdits paramètres et au moins une base de données du relief du terrain survolé (3), afin d'extraire (40) des informations de relief sur un domaine exploré tri-dimensionnel, défini en fonction de la trajectoire de l'aéronef, et d'élaborer d'éventuelles informations d'alerte (51;42), correspondant à un risque de collision entre l'aéronef et le relief, en fonction d'au moins une trajectoire prédite de l'aéronef, et
   - un module de visualisation (5), agencé pour coopérer avec le module d'aide (4) afin d'afficher (55) une représentation bi-dimensionnelle du relief sur un domaine visualisé, et d'y insérer une signalisation d'alertes éventuelles,

   **caractérisé en ce que** le module d'aide (4) est agencé pour établir un état de phase d'atterrissage et/ou de décollage détecté (41), ainsi que pour coopérer avec le module de visualisation (5) afin d'inhiber sélectivement la signalisation éventuelle d'alertes sur des parties définies et limitées du domaine visualisé, en phase d'atterrissage et/ou de décollage détecté, les parties définies et limitées du domaine visualisé (61) comprenant des parties voisines de la trajectoire prédite de l'aéronef.

2. Dispositif selon la revendication 1, **caractérisé en ce que** les alertes comprennent des pré-alarmes et des alarmes.

3. Dispositif selon la revendication 2, **caractérisé en ce que** les alertes comprennent des indications prévisionnelles sur des alarmes ou pré-alarmes futures.

4. Dispositif selon la revendication 3, **caractérisé en ce que** les parties voisines de la trajectoire prédite de l'aéronef (TA) comprennent un secteur angulaire, dans le plan de la trajectoire de l'aéronef, d'angle au sommet (U) compris entre environ $\pm$ 10° et $\pm$ 45° autour de la trajectoire de l'aéronef prédite de l'aéronef en phase de décollage détectée.

5. Dispositif selon la revendication 4, **caractérisé en ce que** l'angle au sommet (U) est voisin de $\pm$ 15°.

6. Dispositif selon l'une des revendications 4 à 5, **caractérisé en ce que** les parties voisines de la trajectoire prédite de l'aéronef (TA) comprennent un secteur angulaire, dans le plan de la trajectoire de l'aéronef, d'angle au sommet (U) compris entre environ $\pm$ 10° et $\pm$ 45° autour de l'axe aéronef / piste en phase d'atterrissage détectée pour un critère d'approche d'une piste d'atterrissage validé.

7. Dispositif selon la revendication 6, **caractérisé en ce que** le critère d'approche comprend une hauteur déterminée de l'avion au-dessus de la piste d'atterrissage et une vitesse choisie de l'avion.

8. Dispositif selon les revendications 6 et 7, **caractérisé en ce que** l'angle au sommet (U) est d'environ $\pm$ 15° pour une distance horizontale entre l'avion et le seuil de la piste d'atterrissage comprise entre environ 7 NM et environ 15 NM.

9. Dispositif selon l'une des revendications 6 à 8 l **caractérisé en ce que** l'angle au sommet (U) est d'environ $\pm$ 30° pour une distance horizontale entre l'avion et le seuil de la piste d'atterrissage comprise entre environ 2,7 NM et environ 7 NM.

10. Dispositif selon la revendication 1, **caractérisé en ce que** les parties définies du domaine visualisé (61) comprennent des parties voisines d'une piste d'atterrissage/de décollage visualisée.

**11.** Dispositif selon les revendications 1 à 10, dans lequel le module de visualisation (5), agencé pour coopérer avec le module d'aide (4) afin d'afficher (55) une représentation bi-dimensionnelle du relief sur un domaine visualisé (61), **caractérisé en ce que** le module de visualisation (5), agencé pour coopérer avec le module d'aide (4), est propre à inhiber certaines des parties de cette représentation en fonction d'une condition comprenant le fait que le point le plus bas de chacune de ces parties soit en dessous d'une hauteur choisie et qu'un critère de proximité entre l'aéronef et une piste soit validé.

**12.** Dispositif selon la revendication 11, **caractérisé en ce que** ledit critère de proximité comprend le fait que la hauteur d'aéronef par rapport au niveau de la piste la plus proche soit inférieure à un seuil pré-défini et le fait que la distance horizontale entre l'aéronef et la piste la plus proche soit inférieure à un seuil pré-défini.

**13.** Dispositif selon les revendications 1 à 12, **caractérisé en ce que** le module de visualisation (5) est agencé pour coopérer avec le module d'aide (4) afin d'afficher (55) la piste selon une couleur spécifique en phase d'atterrissage/de décollage de l'aéronef.

**14.** Dispositif selon l'une des revendications précédentes, **caractérisé en ce que** le module d'aide (4) est agencé pour déterminer des coupes du terrain suivant des surfaces définies selon une règle de découpe, et **en ce que** le module de visualisation (5) est agencé pour visualiser une carte des coupes du terrain, selon une gradation choisie de rendu des altitudes.

**15.** Dispositif selon la revendication 14, **caractérisé en ce que** la règle de découpe comprend la construction de surfaces de découpes (SNI, SN2, SN3, SN4, SN5) parallèles entre-elles selon un échelonnement vertical choisi et constituées chacune d'une première surface définie selon la direction de la trajectoire instantanée de l'aéronef (TA), puis d'une deuxième surface horizontale.

**16.** Dispositif selon la revendication 14, **caractérisé en ce que** la règle de découpe comprend la construction de surfaces de découpes (SN1, SN2, SN3, SN4, SN5) parallèles entre-elles selon un échelonnement vertical (EV) choisi et constituées chacune d'une surface horizontale.

**17.** Dispositif selon l'une des revendications 14 à 16, **caractérisé en ce que** l'échelonnement vertical (EV) choisi est rapporté à la position instantanée de l'aéronef en (P).

**18.** Dispositif selon l'une des revendications 14 à 17, **caractérisé en ce que** les surfaces de découpes comprennent une partie définie par rapport à la vitesse instantanée de l'aéronef.

**19.** Dispositif selon l'une des revendications 14 à 18, **caractérisé en ce que** les surfaces de découpes comprennent chacune une surface définie en partie par rapport à la direction du vecteur vitesse instantanée de l'aéronef.

**20.** Dispositif selon l'une des revendications 14 à 16, **caractérisé en ce que** l'échelonnement vertical (EV) choisi est rapporté à la piste.

**21.** Dispositif selon les revendications 14 à 20, **caractérisé en ce que** la gradation choisie de rendu des altitudes comprend un code de couleur fondé sur un dégradé de couleurs neutres.

**22.** Dispositif selon l'une des revendications précédentes, **caractérisé en ce que** le module d'aide (4) est propre à définir une trajectoire d'évasive (TE), comprenant une prolongation de la trajectoire instantanée de l'aéronef (PM) suivie d'un point de départ (M) d'une manoeuvre d'évitement à composante choisie, ainsi qu'à définir une nappe de trajectoires d'évasive par balayage angulaire à partir de la première.

**23.** Dispositif selon la revendication 22, **caractérisé en ce que** la manoeuvre d'évitement comprend une composante verticale (SVRM).

**24.** Dispositif selon la revendication 22, **caractérisé en ce que** la manoeuvre d'évitement comprend une composante horizontale (SHRM).

**25.** Dispositif selon l'une des revendications 22 à 24, **caractérisé en ce que** le module d'aide (4) est propre à détecter l'intersection du relief (Sp) avec la nappe de trajectoires d'évasive (TE) puis à provoquer le déclenchement sélectif d'alertes suivant la durée estimée entre la position instantanée de l'aéronef (P) et le point de départ (M) d'une manoeuvre d'évitement.

**26.** Dispositif selon l'une des revendications 20 à 25, **caractérisé en ce que** les alertes comprennent une pré-alarme déclenchée pour la durée estimée de 20 secondes et une alarme déclenchée pour la durée estimée de 5 secondes.

**27.** Dispositif selon l'une des revendications 20 à 26, **caractérisé en ce que** les alertes comprennent des indications prévisionnelles sur des alarmes ou pré-alarmes futures, appelées lignes d'alerte.

**28.** Dispositif selon l'une des revendications 22 à 27, **caractérisé en ce que** le module de visualisation (5) est propre à représenter, selon un mode choisi, un type de ligne d'alerte à la fois.

**29.** Dispositif selon la revendication 28, **caractérisé en ce que** ledit mode choisi comprend la réduction des tronçons de radiales (E) délimitant lesdites lignes d'alerte à leurs extrémités.

**30.** Dispositif selon l'une des revendications 28 et 29, **caractérisé en ce que** ledit mode choisi comprend un raccordement de tronçons de radiales entre deux lignes d'alerte (L'1 et L'2) ayant chacune un tronçon de radiale situé sur une même radiale, ledit raccordement étant effectué après vérification d'un critère.

**31.** Dispositif selon l'une des revendications 28 à 30, **caractérisé en ce que** ledit critère comprend le fait que la distance (r) entre deux quelconques des points de tronçon d'une même radiale n'excède pas une valeur pré-définie, notamment 2 NM.

**32.** Dispositif selon l'une des revendications 28 à 31, **caractérisé en ce que** ledit mode choisi comprend la visualisation d'une ligne d'alerte (LA) sous une forme arrondie (LC) autour de l'aéronef P lorsqu'une distance d'une valeur minimale prédéterminée n'est pas respectée entre lesdites lignes d'alerte (LA) et l'aéronef (P) visualisé sur ledit support.

**33.** Dispositif selon l'une des revendications 28 à 32, **caractérisé en ce que** ledit mode choisi comprend un secteur angulaire choisi pour la visualisation des lignes d'alerte.

**34.** Dispositif selon la revendication 33, **caractérisé en ce que** ledit secteur angulaire choisi est compris entre environ $\pm$ 10° et $\pm$ 90°.

**35.** Dispositif selon l'une des revendications précédentes, **caractérisé en ce que** le module d'aide (4) est agencé pour représenter, sur le dispositif de visualisation (55) et à la suite du déclenchement d'une alerte d'un certain type, des zones de terrain alertant de type correspondant délimitées suivant deux types de trajectoires d'évasive (TPA et TPB.) et projetées selon des radiales (R).

**36.** Dispositif selon la revendication 35, **caractérisé en ce que** les zones de terrain alertant de type pré-alarme comprennent une zone de terrain délimitée entre la trajectoire d'évasive (TPA) déclenchant une pré-alarme et la trajectoire d'évasive (TPB) déclenchant une alarme.

**37.** Dispositif selon l'une des revendications 35 et 36, **caractérisé en ce que** les zones de terrain alertant de type alarme comprennent une zone de terrain située sur la trajectoire d'évasive (TA) entre les points (B1) et (B2) ainsi qu'au-delà, une zone de terrain située entre les deux trajectoires d'évasive (TPA) et (TPB.) délimitée sur son bord inférieur par le segment horizontal [B4-B3].

**38.** Dispositif selon l'une des revendications 35 à 37, **caractérisé en ce que** le module d'aide (4) est propre à utiliser des textures différentes pour les zones de terrain alertant de type alarme "évitement de terrain" et alarme "monter".

**39.** Dispositif selon la revendication 38, **caractérisé en ce que** ladite texture est de couleur rouge unie pour la zone de terrain alertant de type alarme "monter" .

**40.** Dispositif selon l'une des revendications 38 et 39, **caractérisé en ce que** ladite texture est préférentiellement de couleur rouge unie tranchant, en alternance, avec une autre couleur sous forme de bandes circulaires concentriques pour la zone de type alarme "évitement de terrain".

**41.** Dispositif selon l'une des revendications 38 et 39, **caractérisé en ce que** ladite texture est préférentiellement de couleur rouge unie tranchant, en double alternance, avec une autre couleur sous forme de bandes radiales et circulaires concentriques pour la zone de type alarme "évitement de terrain".

42. Dispositif selon l'une des revendications 40 et 41, **caractérisé en ce que** ladite autre couleur est préférentiellement du noir.

43. Dispositif selon l'une des revendications 40 et 41, **caractérisé en ce que** ladite autre couleur est préférentiellement du blanc.

44. Dispositif selon l'une des revendications précédentes, **caractérisé en ce que** le module de visualisation (4) est agencé pour piloter un écran de visualisation afin d'afficher une partie délimitée entre $\pm$ 45° et $\pm$ 90° en fonction de la situation de l'avion du Secteur Exploré (61) et lesdites éventuelles zone de terrain alertant.

45. Dispositif selon la revendication 44, **caractérisé en ce que** le module de visualisation (5) est agencé pour signaler différemment d'une part une éventuelle zone de terrain alertant dans la partie délimitée du Secteur Exploré (61), d'autre part une éventuelle zone de terrain alertant (RE1) située hors de cette partie choisie du Secteur Exploré (61).

46. Dispositif selon l'une des revendications 44 et 45, **caractérisé en ce que** l'affichage d'une éventuelle zone de terrain alertant située hors de la partie délimitée du Secteur Exploré (61) comprend au moins une visualisation d'une zone de terrain alertant sur les limites de ladite partie du Secteur Exploré (61).

47. Dispositif selon l'une des revendications 44 à 46, **caractérisé en ce que** la visualisation d'une zone de terrain alertant sur les limites de ladite partie délimitée du Secteur Exploré comprend un rectangle de visualisation (RE1).

48. Dispositif selon la revendication 47, **caractérisé en ce que** ledit rectangle de visualisation (RE1) est de largeur fixe, de longueur liée à celle du relief de la surface dangereuse, de couleur liée à un type d'alerte de collision possible.

**Claims**

1. A device for aiding air navigation, designed to be on board an aircraft, and comprising:

   - an input (2) for receiving the static and dynamic parameters of the aircraft;
   - an aid module (4) arranged to use said parameters and at least one database of the relief of the overflown terrain (3), so as to extract (40) relief information over a three-dimensional explored area, defined as a function of the trajectory of the aircraft, and to develop possible alerting information (51; 42) corresponding to a risk of collision between the aircraft and the relief, as a function of at least one predicted trajectory of the aircraft, and
   - a display module (5), arranged to cooperate with the aid module (4) so as to display (55) a two-dimensional representation of the relief over a displayed area and to insert a signalisation of possible alerts therein,

   **characterised in that** the aid module (4) is arranged to establish a detected landing and/or take-off phase condition (41) and to cooperate with the display module (5) so as to selectively inhibit the possible signalisation of alerts on defined and limited parts of the displayed area, during the detected landing and/or take-off phase, the defined and limited parts of the displayed area (61) comprising neighbouring parts of the predicted trajectory of the aircraft.

2. The device according to claim 1, **characterised in that** the alerts comprise pre-alarms and alarms.

3. The device according to claim 2, **characterised in that** the alerts comprise predictive indications of future alarms or pre-alarms.

4. The device according to claim 3, **characterised in that** the neighbouring parts of the predicted trajectory of the aircraft (TA) comprise an angular sector, in the plane of the trajectory of the aircraft, having an apex angle (U) of between approximately $\pm$ 10 and $\pm$ 45° around the predicted trajectory of the aircraft during the detected take-off phase.

5. The device according to claim 4, **characterised in that** the apex angle (U) is in the region of $\pm$ 15°.

6. The device according to any one of claims 4 to 5, **characterised in that** the neighbouring parts of the predicted trajectory of the aircraft (TA) comprise an angular sector, in the plane of the trajectory of the aircraft, having an apex angle (U) of between approximately ± 10° and ± 45° around the aircraft/runway axis during the detected landing phase for an approach criterion of a validated landing runway.

7. The device according to claim 6, **characterised in that** the approach criterion comprises a determined height of the aeroplane above the landing runway and a selected speed of the aeroplane.

8. The device according to any one of claims 6 to 7, **characterised in that** the apex angle (U) is approximately ± 15° for a horizontal distance between the aeroplane and the threshold of the landing runway of between approximately 7 NM and approximately 15 NM.

9. The device according to any one of claims 6 to 8, **characterised in that** the apex angle (U) is approximately ± 30° for a horizontal distance between the aeroplane and the threshold of the landing runway of between approximately 2.7 NM and approximately 7 NM.

10. The device according to claim 1, **characterised in that** the defined parts of the displayed area (61) comprise neighbouring parts of a displayed landing/take-off runway.

11. The device according to any one of claims 1 to 10, wherein the display module (5) is arranged to cooperate with the aid module (4) so as to display (55) a two-dimensional representation of the relief over a displayed area (61), **characterised in that** the display module (5), which is arranged to cooperate with the aid module (4), is able to inhibit certain parts of this representation as a function of a condition comprising the fact that the lowest point of each of these parts is below a selected height and that a proximity criterion between the aircraft and a runway is validated.

12. The device according to claim 11, **characterised in that** said proximity criterion comprises the fact that the height of the aircraft relative to the level of the closest runway is less than a predefined threshold and the fact that the horizontal distance between the aircraft and the closest runway is less than a predefined threshold.

13. The device according to any one of claims 1 to 12, **characterised in that** the display module (5) is arranged to cooperate with the aid module (4) so as to display (55) the runway in a specific colour during the landing/take-off phase of the aircraft.

14. The device according to any one of the preceding claims, **characterised in that** the aid module (4) is arranged to determine terrain cuts along surfaces that are defined according to a sectioning rule, and **in that** the display module (5) is arranged to display a map of the terrain cuts according to a selected gradation for rendering altitudes.

15. The device according to claim 14, **characterised in that** the sectioning rule comprises the construction of sectional surfaces (SN1, SN2, SN3, SN4, SN5) that are parallel to each other according to a selected vertical scale and that are each constituted by a first surface defined along the direction of the instantaneous trajectory of the aircraft (TA), and then a second horizontal surface.

16. The device according to claim 14, **characterised in that** the sectioning rule comprises the construction of sectional surfaces (SN1, SN2, SN3, SN4, SN5) that are parallel to each other according to a selected vertical scale (EV) and that are each constituted by a horizontal surface.

17. The device according to claims 14 to 16, **characterised in that** the selected vertical scale (EV) is in relation to the instantaneous position (P) of the aircraft.

18. The device according to any one of claims 14 to 17, **characterised in that** the sectional surfaces comprise a part that is defined relative to the instantaneous speed of the aircraft.

19. The device according to any one of claims 14 to 18, **characterised in that** the sectional surfaces each comprise a surface that is partly defined relative to the direction of the instantaneous speed vector of the aircraft.

20. The device according to any one of claims 14 to 16, **characterised in that** the selected vertical scale (EV) is in relation to the runway.

21. The device according to claims 14 to 20, **characterised in that** the selected gradation for rendering the altitudes comprises a colour code based on a gradual shading of neutral colours.

22. The device according to any one of the preceding claims, **characterised in that** the aid module (4) is designed to define an evasive trajectory (TE), comprising an extension of the instantaneous trajectory of the aircraft (PM) followed by a starting point (M) for an avoidance manoeuvre having a selected component, as well as defining a layer of evasive trajectories by angular scanning from the first evasive trajectory.

23. The device according to claim 22, **characterised in that** the avoidance manoeuvre comprises a vertical component (SVRM).

24. The device according to claim 22, **characterised in that** the avoidance manoeuvre comprises a horizontal component (SHRM).

25. The device according to any one of claims 22 to 24, **characterised in that** the aid module (4) is designed to detect the intersection of the relief (Sp) with the layer of evasive trajectories (TE) and then to cause the selective triggering of alerts depending on the estimated duration between the instantaneous position (P) of the aircraft and the starting point (M) of an avoidance manoeuvre.

26. The device according to any one of claims 20 to 25, **characterised in that** the alerts comprise a pre-alarm that is triggered for an estimated duration of 20 seconds and an alarm that is triggered for an estimated duration of 5 seconds.

27. The device according to any one of claims 20 to 26, **characterised in that** the alerts comprise predictive indications of future alarms or pre-alarms, referred to as alert lines.

28. The device according to any one of claims 22 to 27, **characterised in that** the display module (5) is designed to represent, depending on a selected mode, a type of alert line at a time.

29. The device according to claim 28, **characterised in that** said selected mode comprises the reduction of the sections of radials (E) delimiting said lines at their ends.

30. The device according to any one of claims 28 to 29, **characterised in that** said selected mode comprises a connection of the sections of radials between two alert lines (L' 1 and L'2) each having a section of a radial located on the same radial, said connection being performed following verification of a criterion.

31. The device according to any one of claims 28 to 30, **characterised in that** said criterion comprises the fact that the distance (r) between any two points of the part of the same radial does not exceed a pre-defined value, notably 2 NM.

32. The device according to any one of claims 28 to 31, **characterised in that** said selected mode comprises the display of an alert line (LA) having a rounded shape (LC) around the aircraft P when a distance having a pre-determined minimal value is not adhered to between said alert lines (LA) and the aircraft (P) displayed on said support.

33. The device according to any one of claims 28 to 32, **characterised in that** said selected mode comprises an angular sector selected for displaying the alert lines.

34. The device according to claim 33, **characterised in that** said selected angular sector is between approximately $\pm$ 10° and $\pm$ 90°.

35. The device according to any one of the preceding claims, **characterised in that** the aid module (4) is arranged to represent, on the display device (55) and after a certain type of alert has been triggered, alerting terrain zones of the corresponding type, that are delimited along two types of evasive trajectories (TPA and TPB) and are projected along radials (R).

36. The device according to claim 35, **characterised in that** the alerting terrain zones of the pre-alarm type comprise a terrain zone that is delimited between the evasive trajectory (TPA) triggering a pre-alarm and the evasive trajectory (TPB) triggering an alarm.

37. The device according to any one of claims 35 to 36, **characterised in that** the alerting terrain zones of the alarm type comprise a terrain zone located on the evasive trajectory (TA) between points (B1) and (B2) and beyond, a terrain zone located between the two evasive trajectories (TPA) and (TPB) delimited on its lower edge by the horizontal segment [B4-B3].

38. The device according to any one of claims 35 to 37, **characterised in that** the aid module (4) is designed to use different textures for the alerting terrain zones of the "avoid terrain" and "climb" alarm type.

39. The device according to claim 38, **characterised in that** said texture is solid red for the alerting terrain zone of the "climb" alarm type.

40. The device according to any one of claims 38 to 39, **characterised in that** said texture is preferably solid bright red alternating with another colour in the form of concentric circular bands for the zone of the "avoid terrain" alarm type.

41. The device according to any one of claims 38 to 39, **characterised in that** said texture is preferably solid bright red double-alternating with another colour in the form of radial and concentric circular bands for the zone of the "avoid terrain" alarm type.

42. The device according to any one of claims 40 to 41, **characterised in that** said other colour is preferably black.

43. The device according to any one of claims 40 to 41, **characterised in that** said other colour is preferably white.

44. The device according to any one of the preceding claims, **characterised in that** the display module (5) is arranged to control a display screen so as to display a part that is delimited between $\pm$ 45° and $\pm$ 90° as a function of the location of the aircraft in the explored sector (61) and said possible alerting terrain zones.

45. The device according to claim 44, **characterised in that** the display module (5) is arranged to signal differently for a possible alerting terrain zone in the delimited section of the explored sector (61), on the one hand, and a possible alerting terrain zone (RE1) located outside of this selected section of the explored sector (61), on the other hand.

46. The device according to any one of claims 44 to 45, **characterised in that** the display of a possible alerting terrain zone located outside of the delimited part of the explored sector (61) at least comprises a display of an alerting terrain zone on the limits of said section of the explored sector (61).

47. The device according to any one of claims 44 to 46, **characterised in that** the display of an alerting terrain zone on the limits of said delimited part of the explored sector comprises a display rectangle (RE1).

48. The device according to claim 47, **characterised in that** said display rectangle (RE1) is of fixed width, its length is associated with that of the relief of the dangerous surface and its colour is associated with a "collision possible" alert type.

**Patentansprüche**

1. Hilfsvorrichtung zur Luftnavigation, mit der ein Luftfahrzeug ausgestattet wird und die Folgendes umfasst:

- einen Eingang (2) zum Empfangen von statischen und dynamischen Parametern des Luftfahrzeugs,
- ein Hilfsmodul (4), das zum Benutzen der Parameter und wenigstens einer Datenbank des Reliefs des überflogenen Geländes (3) ausgelegt ist, um Reliefinformationen über einen untersuchten dreidimensionalen Bereich daraus abzurufen, definiert in Abhängigkeit von der Flugbahn des Luftfahrzeugs, und um eventuelle Warninformationen (51; 42) zu entwickeln, die einem Kollisionsrisiko zwischen dem Luftfahrzeug und dem Relief entsprechen, in Abhängigkeit von wenigstens einer vorhergesagten Flugbahn des Luftfahrzeugs, und
- ein Anzeigemodul (5), das zum Zusammenwirken mit dem Hilfsmodul (4) ausgelegt ist, um eine zweidimensionale Darstellung des Reliefs auf einem Anzeigebereich anzuzeigen (55) und dort eine Signalisierung eventueller Alarmierungen einzufügen,

**dadurch gekennzeichnet, dass** das Hilfsmodul (4) ausgelegt ist, um einen erkannten Lande- und/oder Startphasenzustand (41) zu bestimmen und mit dem Anzeigemodul (5) zusammenzuwirken, um in der erkannten Lande- und/oder Startphase selektiv die eventuelle Signalisierung von Alarmierungen auf definierten und begrenzten Teilen des angezeigten Bereichs zu sperren, wobei die definierten und begrenzten Teile des angezeigten Bereichs (61) benachbarte Teile der vorhergesagten Flugbahn des Luftfahrzeugs umfassen.

2. Vorrichtung nach Anspruch 1, **dadurch gekennzeichnet, dass** die Alarmierungen Voralarme und Alarme umfassen.

3. Vorrichtung nach Anspruch 2, **dadurch gekennzeichnet, dass** die Alarmierungen prädiktive Indikationen über zukünftige Alarme oder Voralarme umfassen.

4. Vorrichtung nach Anspruch 3, **dadurch gekennzeichnet, dass** die Nachbarteile der vorgesagten Flugbahn des Luftfahrzeugs (TA) einen Winkelsektor, in der Ebene der Flugbahn des Luftfahrzeugs, eines Scheitelwinkels (U) zwischen etwa ± 10° und ± 45° um die vorgesagte Flugbahn des Luftfahrzeugs in der erkannten Startphase umfassen.

5. Vorrichtung nach Anspruch 4, **dadurch gekennzeichnet, dass** der Scheitelwinkel (U) um ± 15° liegt.

6. Vorrichtung nach einem der Ansprüche 4 bis 5, **dadurch gekennzeichnet, dass** die Nachbarteile der vorgesagten Flugbahn des Luftfahrzeugs (TA) einen Winkelsektor, in der Ebene der Flugbahn des Luftfahrzeugs, eines Scheitelwinkels (U) zwischen etwa ± 10° und ± 45° um die Achse Luftfahrzeug/Landebahn in der erkannten Landephase für ein Anflugkriterium einer validierten Landebahn umfassen.

7. Vorrichtung nach Anspruch 6, **dadurch gekennzeichnet, dass** das Anflugkriterium eine vorbestimmte Höhe des Flugzeugs über der Landebahn und eine gewählte Geschwindigkeit des Flugzeugs umfasst.

8. Vorrichtung nach den Ansprüchen 6 und 7, **dadurch gekennzeichnet, dass** der Scheitelwinkel (U) etwa ± 15° für eine horizontale Distanz zwischen dem Flugzeug und der Schwelle der Landebahn zwischen etwa 7 NM und etwa 15 NM liegt.

9. Vorrichtung nach einem der Ansprüche 6 bis 8, **dadurch gekennzeichnet, dass** der Scheitelwinkel (U) etwa ± 30° für eine horizontale Distanz zwischen dem Flugzeug und der Schwelle der Landebahn zwischen etwa 2,7 NM und etwa 7 NM beträgt.

10. Vorrichtung nach Anspruch 1, **dadurch gekennzeichnet, dass** die definierten Teile des angezeigten Bereichs (61) Nachbarteile einer angezeigten Start-/Landebahn umfassen.

11. Vorrichtung nach den Ansprüchen 1 bis 10, wobei das Anzeigemodul (5) ausgelegt ist, um mit dem Hilfsmodul (4) zusammenzuwirken, um eine zweidimensionale Darstellung des Reliefs in einem angezeigten Bereich (61) anzuzeigen (55), **dadurch gekennzeichnet, dass** das Anzeigemodul (5), das zum Zusammenwirken mit dem Hilfsmodul (4) ausgelegt ist, bestimmte Teile dieser Darstellung in Abhängigkeit von einer Bedingung sperren kann, die die Tatsache beinhaltet, dass der tiefste Punkt jedes dieser Teile unterhalb einer gewählten Höhe ist und dass ein Nähekriterium zwischen dem Luftfahrzeug und einer Start-/Landebahn validiert wird.

12. Vorrichtung nach Anspruch 11, **dadurch gekennzeichnet, dass** das Nähekriterium die Tatsache beinhaltet, dass die Höhe des Luftfahrzeugs in Bezug auf das Niveau der nächstliegenden Landebahn geringer ist als ein vordefinierter Schwellenwert, und die Tatsache, dass die horizontale Distanz zwischen dem Luftfahrzeug und der nächstliegenden Start-/Landebahn geringer ist als ein vordefinierter Schwellenwert.

13. Vorrichtung nach den Ansprüchen 1 bis 12, **dadurch gekennzeichnet, dass** das Anzeigemodul (5) ausgelegt ist, um mit dem Hilfsmodul (4) zusammenzuwirken, um die Start-/Landebahn in einer bestimmten Farbe in der Lande-/Startphase des Luftfahrzeugs anzuzeigen (55).

14. Vorrichtung nach einem der vorherigen Ansprüche, **dadurch gekennzeichnet, dass** das Hilfsmodul (4) ausgelegt ist, um Geländeschnitte über definierte Flächen gemäß einer Schnittregel zu ermitteln, und dadurch, dass das Anzeigemodul (5) ausgelegt ist, um eine Geländeschnittkarte gemäß einer gewählten Gradierung zum Rendern von Höhen anzuzeigen.

15. Vorrichtung nach Anspruch 14, **dadurch gekennzeichnet, dass** die Schnittregel die Konstruktion von zueinander parallelen Schnittflächen (SN1, SN2, SN3, SN4, SN5) gemäß einem gewählten vertikalen Maßstab umfasst, die jeweils von einer gemäß der Richtung der momentanen Flugbahn des Luftfahrzeugs (TA) definierten ersten Fläche und dann einer zweiten horizontalen Fläche gebildet werden.

**16.** Vorrichtung nach Anspruch 14, **dadurch gekennzeichnet, dass** die Schnittregel die Konstruktion von zueinander parallelen Schnittflächen (SN1, SN2, SN3, SN4, SN5) gemäß einem gewählten vertikalen Maßstab (EV) umfasst, die jeweils von einer horizontalen Fläche gebildet werden.

**17.** Vorrichtung nach einem der Ansprüche 14 bis 16, **dadurch gekennzeichnet, dass** der gewählte vertikale Maßstab (EV) auf die momentane Position (P) des Luftfahrzeugs bezogen wird.

**18.** Vorrichtung nach einem der Ansprüche 14 bis 17, **dadurch gekennzeichnet, dass** die Schnittflächen einen Teil umfassen, der in Bezug auf die momentane Geschwindigkeit des Luftfahrzeugs definiert wird.

**19.** Vorrichtung nach einem der Ansprüche 14 bis 18, **dadurch gekennzeichnet, dass** die Schnittflächen jeweils eine Fläche umfassen, die teilweise in Bezug auf die Richtung des momentanen Geschwindigkeitsvektors des Luftfahrzeugs definiert wird.

**20.** Vorrichtung nach einem der Ansprüche 14 bis 16, **dadurch gekennzeichnet, dass** der gewählte vertikale Maßstab (EV) auf die Start-/Landebahn bezogen wird.

**21.** Vorrichtung nach den Ansprüchen 14 bis 20, **dadurch gekennzeichnet, dass** die gewählte Gradierung zum Rendern der Höhe einen Farbcode umfasst, der auf einer Abstufung von neutralen Farben basiert.

**22.** Vorrichtung nach einem der vorherigen Ansprüche, **dadurch gekennzeichnet, dass** das Hilfsmodul (4) eine Ausweichflugbahn (TE) definieren kann, die eine Verlängerung der momentanen Flugbahn des Luftfahrzeugs (PM) gefolgt von einem Startpunkt (M) eines Umgehungsmanövers mit einer gewählten Komponente umfasst, sowie eine Schicht von Ausweichflugbahnen durch winkelmäßiges Abtasten von der ersten Ausweichflugbahn definieren kann.

**23.** Vorrichtung nach Anspruch 22, **dadurch gekennzeichnet, dass** das Umgehungsmanöver eine vertikale Komponente (SVRM) umfasst.

**24.** Vorrichtung nach Anspruch 22, **dadurch gekennzeichnet, dass** das Umgehungsmanöver eine horizontale Komponente (SHRM) umfasst.

**25.** Vorrichtung nach einem der Ansprüche 22 bis 24, **dadurch gekennzeichnet, dass** das Hilfsmodul (4) den Schnittpunkt des Reliefs (Sp) mit der Schicht von Ausweichflugbahnen (TE) erkennen kann, um dann ein selektives Auslösen von Alarmierungen je nach der geschätzten Dauer zwischen der momentanen Position (P) des Luftfahrzeugs und dem Startpunkt (M) eines Ausweichmanövers zu bewirken.

**26.** Vorrichtung nach einem der Ansprüche 20 bis 25, **dadurch gekennzeichnet, dass** die Alarmierungen einen Voralarm, der für die geschätzte Dauer von 20 Sekunden ausgelöst wird, und einen Alarm umfassen, der für die geschätzte Dauer von 5 Sekunden ausgelöst wird.

**27.** Vorrichtung nach einem der Ansprüche 20 bis 26, **dadurch gekennzeichnet, dass** die Alarmierungen prädiktive Indikationen über zukünftige Alarme oder Voralarme umfassen, Alarmierungslinien genannt.

**28.** Vorrichtung nach einem der Ansprüche 22 bis 27, **dadurch gekennzeichnet, dass** das Anzeigemodul (5) je nach einem gewählten Modus jeweils einen Alarmierungslinientyp darstellen kann.

**29.** Vorrichtung nach Anspruch 28, **dadurch gekennzeichnet, dass** der gewählte Modus die Reduzierung von Radialabschnitten (E) umfasst, die die Alarmierungslinien an ihren Enden begrenzen.

**30.** Vorrichtung nach den Ansprüchen 28 und 29, **dadurch gekennzeichnet, dass** der gewählte Modus einen Anschluss von Radialabschnitten zwischen zwei Alarmierungslinien (L'1 und L'2) umfasst, die jeweils einen Radialabschnitt umfassen, der sich auf einem selben Radius befindet, wobei der Anschluss nach der Verifizierung eines Kriteriums erfolgt.

**31.** Vorrichtung nach einem der Ansprüche 28 bis 30, **dadurch gekennzeichnet, dass** das Kriterium die Tatsache beinhaltet, dass die Distanz (r) zwischen zwei beliebigen Punkten des Abschnitts eines selben Radius einen vordefinierten Wert, insbesondere 2 NM, nicht übersteigt.

32. Vorrichtung nach einem der Ansprüche 28 bis 31, **dadurch gekennzeichnet, dass** der gewählte Modus die Anzeige einer Alarmierungslinie (LA) in einer abgerundeten Form (LC) um das Luftfahrzeug P umfasst, wenn eine Distanz mit einem vorbestimmten Mindestwert zwischen den Alarmierungslinien (LA) und dem auf dem Träger angezeigten Luftfahrzeug (P) nicht eingehalten wird.

33. Vorrichtung nach einem der Ansprüche 28 bis 32, **dadurch gekennzeichnet, dass** der gewählte Modus einen gewählten Winkelsektor für die Anzeige der Alarmierungslinien umfasst.

34. Vorrichtung nach Anspruch 33, **dadurch gekennzeichnet, dass** der gewählte Winkelsektor zwischen etwa $\pm$ 10° und $\pm$ 90° liegt.

35. Vorrichtung nach einem der vorherigen Ansprüche, **dadurch gekennzeichnet, dass** das Hilfsmodul (4) ausgelegt ist, um auf der Anzeigevorrichtung (55) und nach dem Auslösen einer Alarmierung eines bestimmten Typs Alarmierungsgeländezonen des entsprechenden Typs darzustellen, die nach zwei Ausweichflugbahntypen (TPA und TPB) begrenzt und entlang den Radien (R) projiziert werden.

36. Vorrichtung nach Anspruch 35, **dadurch gekennzeichnet, dass** die Alarmierungsgeländezonen des Voralarmtyps eine Geländezone beinhalten, die zwischen der einen Voralarm auslösenden Ausweichflugbahn (TPA) und der einen Alarm auslösenden Ausweichflugbahn (TPB) begrenzt wird.

37. Vorrichtung nach einem der Ansprüche 35 und 36, **dadurch gekennzeichnet, dass** die Alarmierungsgeländezonen des Alarmtyps eine Geländezone, die sich auf der Ausweichflugbahn (TA) zwischen den Punkten (B 1) und (B2) sowie darüber hinaus befinden, und eine Geländezone beinhalten, die sich zwischen den beiden Ausweichflugbahnen (TPA) und (TPB) befindet, die am unteren Rand durch das horizontale Segment [B4-B3] begrenzt wird.

38. Vorrichtung nach einem der Ansprüche 35 bis 37, **dadurch gekennzeichnet, dass** das Hilfsmodul (4) unterschiedliche Texturen für die Alarmgeländezonen des Alarmtyps "Geländeumgehung" und des Alarmtyps "Steigflug" nutzen kann.

39. Vorrichtung nach Anspruch 38, **dadurch gekennzeichnet, dass** die Textur eine durchgehend rote Farbe für die Alarmierungsgeländezone des Alarmtyps "Steigflug" hat.

40. Vorrichtung nach einem der Ansprüche 38 und 39, **dadurch gekennzeichnet, dass** die Textur vorzugsweise von einer durchgehend roten Farbe ist, die sich mit einer anderen Farbe in Form von konzentrischen kreisförmigen Streifen für die Zone des Alarmtyps "Geländeumgehung" abwechselt.

41. Vorrichtung nach einem der Ansprüche 38 und 39, **dadurch gekennzeichnet, dass** die Textur vorzugsweise von einer durchgehend roten Farbe ist, die im doppelten Wechsel mit einer anderen Farbe in Form von radialen und konzentrischen kreisförmigen Streifen für die Zone des Alarmtyps "Geländeumgehung" abwechselt.

42. Vorrichtung nach einem der Ansprüche 40 und 41, **dadurch gekennzeichnet, dass** die andere Farbe vorzugsweise Schwarz ist.

43. Vorrichtung nach einem der Ansprüche 40 und 41, **dadurch gekennzeichnet, dass** die andere Farbe vorzugsweise Weiß ist.

44. Vorrichtung nach einem der vorherigen Ansprüche, **dadurch gekennzeichnet, dass** das Anzeigemodul (5) ausgelegt ist, um einen Anzeigeschirm zu steuern, damit er einen Teil anzeigt, der zwischen $\pm$ 45° und $\pm$ 90° in Abhängigkeit vom Ort des Flugzeugs im untersuchten Sektor (61) und den eventuellen Alarmierungsgeländezonen begrenzt wird.

45. Vorrichtung nach Anspruch 44, **dadurch gekennzeichnet, dass** das Anzeigemodul (5) ausgelegt ist, um eine eventuelle Alarmierungsgeländezone in dem begrenzten Teil des untersuchten Sektors (61) einerseits und eine eventuelle Alarmierungsgeländezone (RE1) andererseits unterschiedlich zu signalisieren, die sich außerhalb dieses gewählten Teils des untersuchten Sektors (61) befindet.

**46.** Vorrichtung nach einem der Ansprüche 44 und 45, **dadurch gekennzeichnet, dass** die Anzeige einer eventuellen Alarmierungsgeländezone, die sich außerhalb des begrenzten Teils des untersuchten Sektors (61) befindet, wenigstens eine Anzeige einer Alarmierungsgeländezone auf den Grenzen des Teils des untersuchten Sektors (61) beinhaltet.

**47.** Vorrichtung nach einem der Ansprüche 44 bis 46, **dadurch gekennzeichnet, dass** die Anzeige einer Alarmierungsgeländezone auf den Grenzen des begrenzten Teils des untersuchten Sektors ein Anzeigerechteck (RE1) beinhaltet.

**48.** Vorrichtung nach Anspruch 47, **dadurch gekennzeichnet, dass** das Anzeigerechteck (RE1) eine feste Breite, eine Länge, die mit der des Reliefs der gefährlichen Fläche assoziiert ist, und eine Farbe hat, die mit einem Alarmierungstyp "mögliche Kollision" verbunden ist.

FIG.1

FIG.2

FIG. 3

FIG.4

FIG.4a

FIG.5

FIG.5a

FIG.6

FIG.7

FIG.8

FIG.8a

FIG.9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0565399 A
- EP 0802469 A
- FR 9604678
- FR 2747492 A
- EP 0989386 A